# EUROPEAN PATENT APPLICATION

(11) **EP 4 283 551 A1**
(43) Date of publication of application: **29.11.2023**
(21) Application number: 22177317.9
(22) Date of filing: 03.06.2022
(51) Int. Cl.: G06Q 30/02, H04L 9/00, G06Q 30/0207

(54) **NON-FUNGIBLE TOKEN (NFT) GENERATION FOR SECURE APPLICATIONS**

(30) Priority: 27.05.2022 US 202217827386
(71) Applicant: KeychainX AG, 6300 Zug (CH)
(72) Inventor: Rhodin, Bartlomiej Robert, Walchwil (CH)
(74) Representative: Nordmeyer, Philipp Werner

(57) **Abstract**

Systems, methods, and apparatus for biometric digital signature generation for identity verification are disclosed. In one or more embodiments, a method for identity verification of a user comprises sensing, by at least one sensor, biometric information from the user. The method further comprises generating, by a sensor device, biometric data from the biometric information. Also, the method comprises hashing, by the user device utilizing a fuzzy hash algorithm or a hash algorithm (e.g., a non-fuzzy hash algorithm), at least a portion of the biometric data to generate a biometric digital signature for the user. In addition, the method comprises comparing, by a verification node, the biometric digital signature to a previous biometric digital signature for the user. Further, the method comprises verifying, by the verification node, the user when the verification node determines that the biometric digital signature is identical to the previous biometric digital signature for the user.

## Description

### FIELD

The present disclosure relates to identify verification. In particular, the present disclosure relates to biometric digital signature generation for identity verification and settlements verification for distributed ledgers. In addition, the present disclosure relates to non-fungible token (NFT) generation for secure applications.

### BACKGROUND

Distributed ledgers, such as blockchain, provide a unique system for recording transactions. In general, distributed ledgers store a log of transactions that may be replicated across a distributed network. Cryptography and digital signatures are often used to determine valid parties and transactions such that all parties agree on the state of the ledger in real-time without having to rely on a trusted third party. In some instances, however, a user may lose their digital signature for the distributed ledger. It can be a burdensome and lengthy process for the user to obtain another valid digital signature.

In light of the foregoing, there is a need for an improved system and method for generating a valid digital signature for a user.

### SUMMARY

The present disclosure relates to a method, system, and apparatus for biometric digital signature generation for identity verification. In one or more embodiments, a method for identity verification of a user comprises sensing, by at least one sensor, biometric information from the user. The method further comprises generating, by a sensor device, biometric data from the biometric information. Also, the method comprises transmitting, by the sensor device, the biometric data to a user device. Additionally, the method comprises hashing, by the user device, at least a portion of the biometric data to generate a biometric digital signature for the user. In addition, the method comprises transmitting, by the user device, the biometric digital signature to a verification node. Also, the method comprises comparing, by the verification node, the biometric digital signature to a previous biometric digital signature for the user. Further, the method comprises verifying, by the verification node, the user when the verification node determines that the biometric digital signature is identical to the previous biometric digital signature for the user.

In one or more embodiments, the method further comprises, when the user is verified, generating and transmitting, by the verification node to the user device, a confirmation verification signal indicating that the user is verified. In at least one embodiment, the method further comprises not verifying, by the verification node, the user when the verification node determines that the biometric digital signature is not identical to the previous biometric digital signature for the user. In some embodiments, method further comprises, when the user is not verified, generating and transmitting, by the verification node to the user device, an abort verification signal indicating that the user is not verified. In one or more embodiments, the verification node determines that the biometric digital signature is identical to the previous biometric digital signature for the user, when the verification node determines that the biometric digital signature is one hundred (100) percent the same as (e.g., identical to) the previous biometric digital signature for the user.

In at least one embodiment, when the user is verified, the method further comprises allowing the user to transfer assignment of a data block from the user to a beneficiary; allowing the user to transfer ownership of property from the user to the beneficiary; allowing the user to obtain medical records for the user; allowing the user to vote on behalf of the user; allowing the user to obtain travel documentation for the user; and/or allowing the user to make banking transactions on behalf of the user.

In one or more embodiments, the biometric information comprises at least three fingerprints, at least a portion of a deoxyribonucleic acid (DNA) sequence, at least a portion of at least one facial feature, isotopic information from odor, at least a portion of an eye feature, audio information from a voice, a three-dimensional (3D) surface scan of at least a portion of the user, and/or a two-dimensional (2D) surface scan of at least the portion of the user.

In at least one embodiment, the user device utilizes a hash algorithm or a fuzzy hash algorithm to hash at least a portion of the biometric data. In one or more embodiments, the user device utilizes an elliptical curve digital signature algorithm (ECDSA) to hash at least a portion of the biometric data. In some embodiments, the user device utilizes a SHA-256 algorithm, a Merkle-Damgard algorithm, a MD5 algorithm, a SHA-1 algorithm, a SHA-2 algorithm, a RACE Integrity Primitives Evaluation Message Digest-160 (RIPEMD-160) algorithm, a Whirlpool algorithm, or a BLAKE2 algorithm to hash at least a portion of the biometric data.

In one or more embodiments, the biometric digital signature is generated by additionally hashing, by the user device, additional identifying information. In some embodiments, the additional identifying information comprises location information, temperature information, humidity information, date information, time information, elevation information, range information, and/or personal information.

In at least one embodiment, the biometric digital signature is a private identity key for the user. In one or more embodiments, the user device is a smart phone, a tablet device, a personal computer, a laptop computer, a smart watch, a smart television (TV), a car, or a computing device. In some embodiments, the user device comprises at least one sensor, the sensor device, and/or the verification node.

In one or more embodiments, a method for identity verification of at least one user comprises sensing, by at least one sensor, biometric information from the user. The method further comprises generating, by a sensor device, biometric data from the biometric information. Also, the method comprises transmitting, by the sensor device, the biometric data to a user device. In addition, the method comprises hashing, by a user device, at least a portion of the biometric data to generate a biometric digital signature for the user. Additionally, the method comprises storing, by the user device, at least a portion of the biometric digital signature for the user to a host biometric digital signature held by each of at least n (e.g., six (6)) number of persons to generate the host biometric digital signature for each of the n number of persons, such that a combination of the host biometric digital signatures for at least m (e.g., four (4)) number of the n number of persons comprises all of the biometric digital signature for the user, where the m number is a number greater than half of the n number. Also, the method comprises generating, by the user device, a reconstructed biometric digital signature for the user by using the hosted biometric digital signatures for at least m number of the n number of persons. In addition, the method comprises transmitting, by the user device, the reconstructed biometric digital signature to a verification node. Also, the method comprises comparing, by the verification node, the reconstructed biometric digital signature to a previous biometric digital signature for the user. Further, the method comprises verifying, by the verification node, the user when the verification node determines that the reconstructed biometric digital signature is identical to the previous biometric digital signature for the user.

In at least one embodiment, a system for identity verification of a user comprises at least one sensor to sense biometric information from the user. The system further comprises a sensor device to generate biometric data from the biometric information, and to transmit the biometric data to a user device. Also, the system comprises the user device to hash at least a portion of the biometric data to generate a biometric digital signature for the user, and to transmit the biometric digital signature to a verification node. Further, the system comprises the verification node to compare the biometric digital signature to a previous biometric digital signature for the user, and to verify the user when the verification node determines that the biometric digital signature is identical to the previous biometric digital signature for the user.

In one or more embodiments, when the user is verified, the verification node is further to generate and to transmit to the user device, a confirmation verification signal indicating that the user is verified. In at least one embodiment, the verification node is to not verify the user when the verification node determines that the biometric digital signature is not identical to the previous biometric digital signature for the user. In some embodiments, when the user is not verified, the verification node is further to generate and to transmit to the user device, an abort verification signal indicating that the user is not verified. In one or more embodiments, the user device comprises at least one sensor and the sensor device.

In at least one embodiment, the user device is to utilize a hash algorithm or a fuzzy hash algorithm to hash at least a portion of the biometric data to generate the biometric digital signature for the user. In one or more embodiments, the user device is to utilize an elliptical curve digital signature algorithm (ECDSA) to hash at least a portion of the biometric data. In some embodiments, the user device utilizes a SHA-256 algorithm, a Merkle-Damgard algorithm, a MD5 algorithm, a SHA-1 algorithm, a SHA-2 algorithm, a RACE Integrity Primitives Evaluation Message Digest-160 (RIPEMD-160) algorithm, a Whirlpool algorithm, or a BLAKE2 algorithm to hash at least a portion of the biometric data.

In one or more embodiments, a method for generating a product non-fungible token (NFT) for a user comprises receiving an indication that the user has visited a webpage associated with a product. The method further comprises generating the product NFT for the user by hashing, using a hash algorithm, a public key associated with the user and an identification code for the product.

In at least one embodiment, the public key associated with the user is associated with a private key associated with the user. In one or more embodiments, the method further comprises transmitting the product NFT to a digital wallet associated with the user. In some embodiments, the method further comprises storing the public key associated with the user onto a database, after the user has visited the webpage associated with the product.

In one or more embodiments, a discount NFT is transmitted to a digital wallet associated with the user, when the public key associated with the user is stored onto the database. In at least one embodiment, the discount NFT is generated by hashing the product NFT and an NFT salt together. In some embodiments, the NFT salt is associated with at least one of an advertiser of the product, a distributor of the product, or a manufacturer of the product. In one or more embodiments, the discount NFT is associated with a discount for purchase of the product by the user.

In at least one embodiment, a method for a conditional transfer of digital currency comprises transferring the digital currency, which is associated with a user, to a digital wallet associated with a first recipient, when conditional rules for transfer of the digital currency have been met. The method further comprises transferring the digital currency to one of a digital wallet associated with a second recipient or a digital wallet associated with the user, when the conditional rules for transfer of the digital currency have not been met by a specific passage of time.

In one or more embodiments, the method further comprises transferring the digital currency from the digital wallet associated with the user to a digital vault, after the user generates the conditional rules for transfer of the digital currency.

In at least one embodiment, a smart contract comprises the conditional rules for transfer of the digital currency. In some embodiments, the smart contract is code capable to be run on a blockchain. In at least one embodiment, the smart contract self-destructs, when the conditional rules for transfer of the digital currency have not been met by the specific passage of time.

In one or more embodiments, the conditional rules are at least one of a specific time in terms of a calendar date, a specific time in terms of mined blocks on a blockchain, a number of block confirmations on a blockchain, a currency price, or a specific age of a person, or a specific age of the recipient. In some embodiments, the digital currency is a cryptocurrency.

In at least one embodiment, a method for secure communications comprises generating an encrypted communication message by hashing, by using a hashing algorithm, an unencrypted communication message from a first user, a public key associated with the first user, a public key associated with a second user, and at least one of biometric data associated with the first user or geolocation data associated with the first user. The method further comprises transmitting the encrypted communication message to the second user.

In one or more embodiments, the method further comprises obtaining at least one of the biometric data associated with the first user or the geolocation data associated with the first user. In some embodiments, the unencrypted communication message is generated by de-hashing the encrypted communication message with a private key associated with the second user. In at least one embodiment, the private key associated with the second user is based on at least one of geolocation data associated with the second user or biometric data associated with the second user. In some embodiments, the unencrypted communication message is one of a textual message, voice communications, or an image.

In at least one embodiment, a method for secure communications comprises generating an encrypted communication message by hashing, by using a hashing algorithm, an unencrypted communication message from a first user, a public key associated with a second user, and a communications NFT associated with the second user. The method further comprises transmitting the encrypted communication message to the second user.

In one or more embodiments, the communications NFT associated with the second user is generated by hashing a private key associated with the second user and at least one of biometric data associated with the second user or geolocation data associated with the second user. In some embodiments, the unencrypted communication message is generated by de-hashing the encrypted communication message, a private key associated with the second user, and the communications NFT associated with the second user.

The features, functions, and advantages can be achieved independently in various embodiments of the present disclosure or may be combined in yet other embodiments.

### DRAWINGS

These and other features, aspects, and advantages of the present disclosure will become better understood with regard to the following description, appended claims, and accompanying drawings where:
FIG. 1A is a diagram showing the disclosed system for biometric digital signature generation for identity verification of a user, in accordance with at least one embodiment of the present disclosure.
FIG. 1B is a flow chart showing the disclosed method for biometric digital signature generation for identity verification of a user, in accordance with at least one embodiment of the present disclosure.
FIG. 2 is a diagram illustrating the process of hashing biometric data obtained from fingerprints of a user to generate a biometric digital signature for the user, in accordance with at least one embodiment of the present disclosure.
FIG. 3 is a diagram illustrating the process of hashing biometric data obtained from blood of a user to generate a biometric digital signature for the user, in accordance with at least one embodiment of the present disclosure.
FIG. 4 is a diagram illustrating the process of hashing biometric data obtained from a facial scan of a user to generate a biometric digital signature for the user, in accordance with at least one embodiment of the present disclosure.
FIG. 5 is a diagram illustrating the process of hashing biometric data obtained from a scent of a user to generate a biometric digital signature for the user, in accordance with at least one embodiment of the present disclosure.
FIG. 6 is a diagram illustrating the process of hashing biometric data obtained from an eye scan of a user to generate a biometric digital signature for the user, in accordance with at least one embodiment of the present disclosure.
FIG. 7 is a diagram illustrating the process of hashing biometric data obtained from a voice of a user to generate a biometric digital signature for the user, in accordance with at least one embodiment of the present disclosure.
FIG. 8 is a diagram illustrating the process of utilizing biometric digital signatures for the transfer of a property between an initiator (e.g., a user) and a beneficiary, in accordance with at least one embodiment of the present disclosure.
FIG. 9 is a diagram illustrating the process of verifying a user by validating the biometric digital signature for the user to perform a transaction desired by the user, in accordance with at least one embodiment of the present disclosure.
FIG. 10 is a diagram illustrating the process of hashing location data for a user along with biometric data obtained from a user to generate a biometric digital signature for the user, in accordance with at least one embodiment of the present disclosure.
FIG. 11 is a diagram illustrating the process of verifying the user by validating the satellite (e.g., Global Positioning System (GPS) satellite) signature, which comprises location data, for the user of FIG. 11 to perform a transaction desired by the user, in accordance with at least one embodiment of the present disclosure.
FIG. 12 is a diagram illustrating the process of storing a portion of a biometric digital signature for a user to host biometric digital signatures held by other people to generate the host biometric digital signatures for each of the other people, in accordance with at least one embodiment of the present disclosure.
FIG. 13 is a diagram illustrating the process of using the host biometric digital signatures from the people of FIG. 12 to generate a reconstructed biometric digital signature for the user, in accordance with at least one embodiment of the present disclosure.
FIG. 14 is a diagram illustrating the process of verifying the user by validating the reconstructed biometric digital signature for the user of FIG. 13, in accordance with at least one embodiment of the present disclosure.
FIG. 15 is a diagram illustrating various different types of transactions that may occur after the user is verified by validating the biometric digital signature for the user, in accordance with at least one embodiment of the present disclosure.
FIG. 16 is a diagram illustrating various different types of additional identifying information that may be hashed along with biometric data obtained from the user to generate a biometric digital signature for the user, in accordance with at least one embodiment of the present disclosure.
FIG. 17 is a diagram illustrating the process of generating a biometric digital signature for a user by hashing biometric data from the user along with additional identifying information and personal information for the user, in accordance with at least one embodiment of the present disclosure.
FIGS. 18, 19, 20, 21, and 22 are diagrams that together show processes for generating and utilizing non-fungible tokens (NFTs) for discounts for purchases, in accordance with at least one embodiment of the present disclosure.

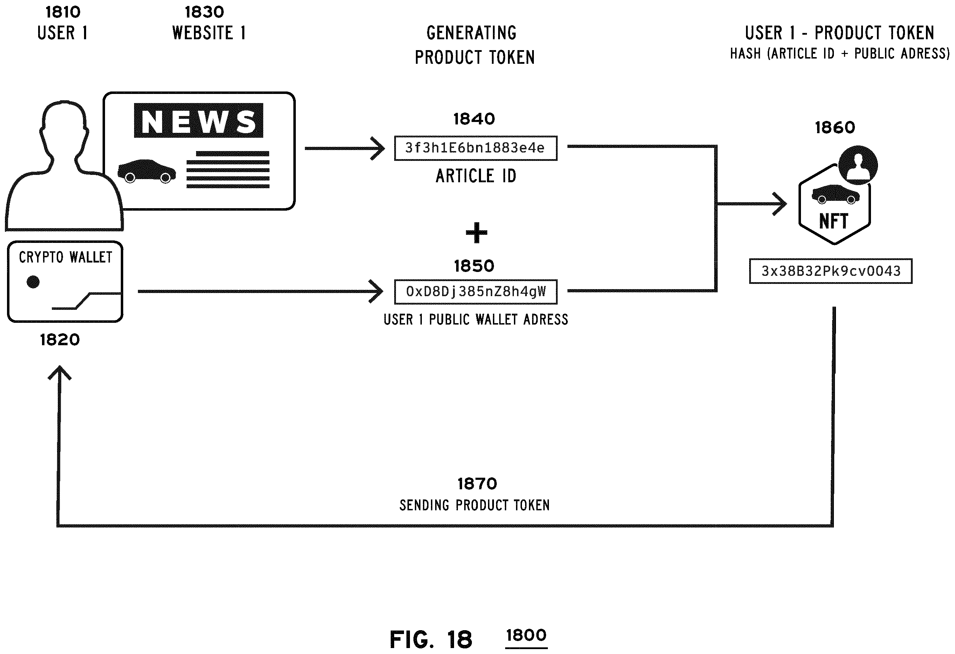

FIG. 18 is a diagram illustrating the process for generating a non-fungible token (NFT) for a product, in accordance with at least one embodiment of the present disclosure.

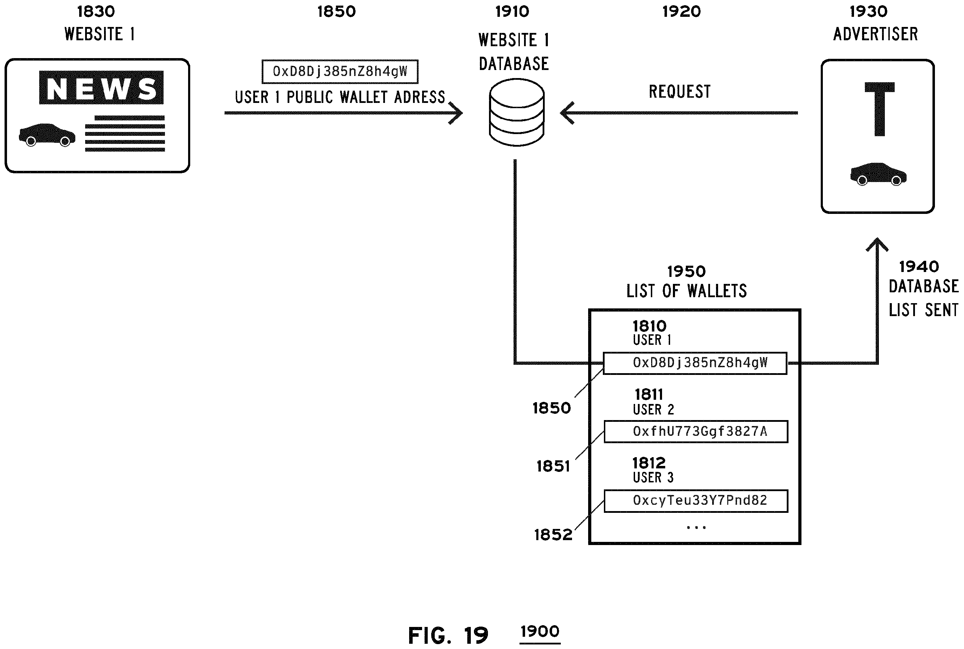

FIG. 19 is a diagram illustrating the process for verifying that a user obtained a NFT for a product, in accordance with at least one embodiment of the present disclosure.

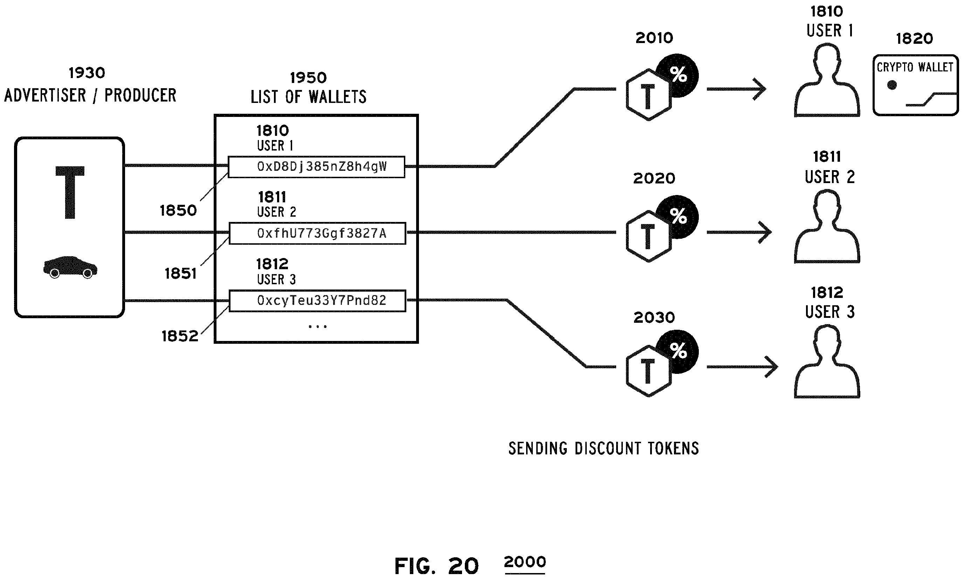

FIG. 20 is a diagram illustrating the process for sending to users NFTs for discounts for purchases, in accordance with at least one embodiment of the present disclosure.

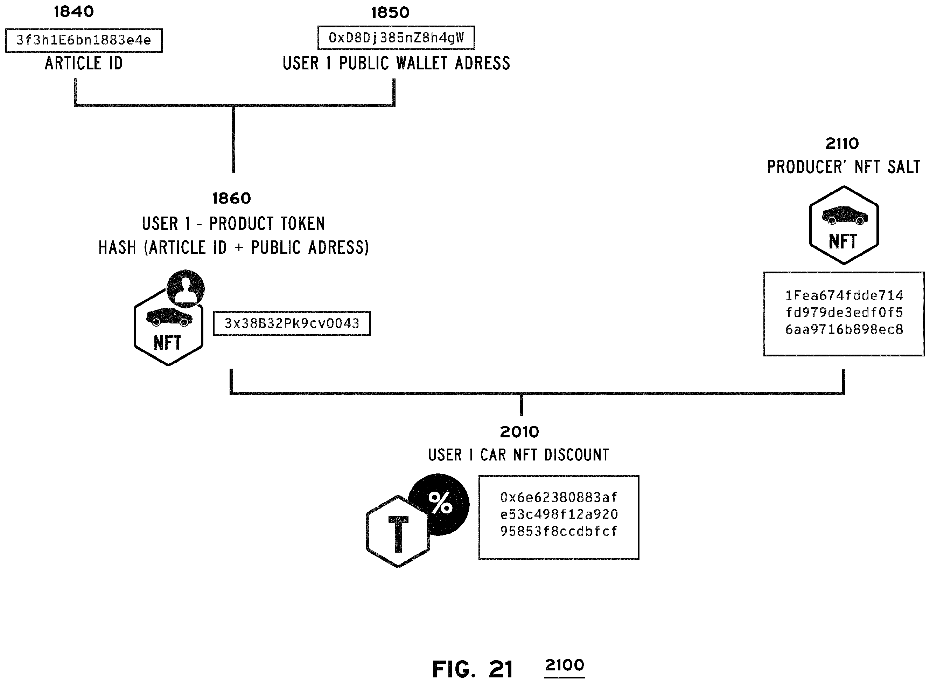

FIG. 21 is a diagram illustrating the process for generating an NFT for a discount for a purchase, in accordance with at least one embodiment of the present disclosure.

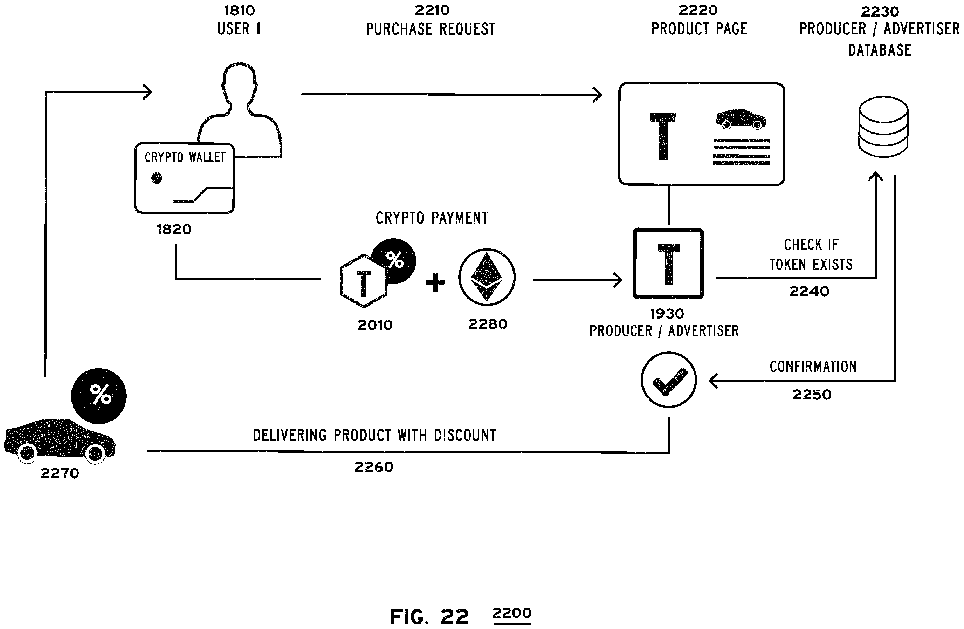

FIG. 22 is a diagram illustrating the process for utilizing an NFT for a discount for a purchase, in accordance with at least one embodiment of the present disclosure.

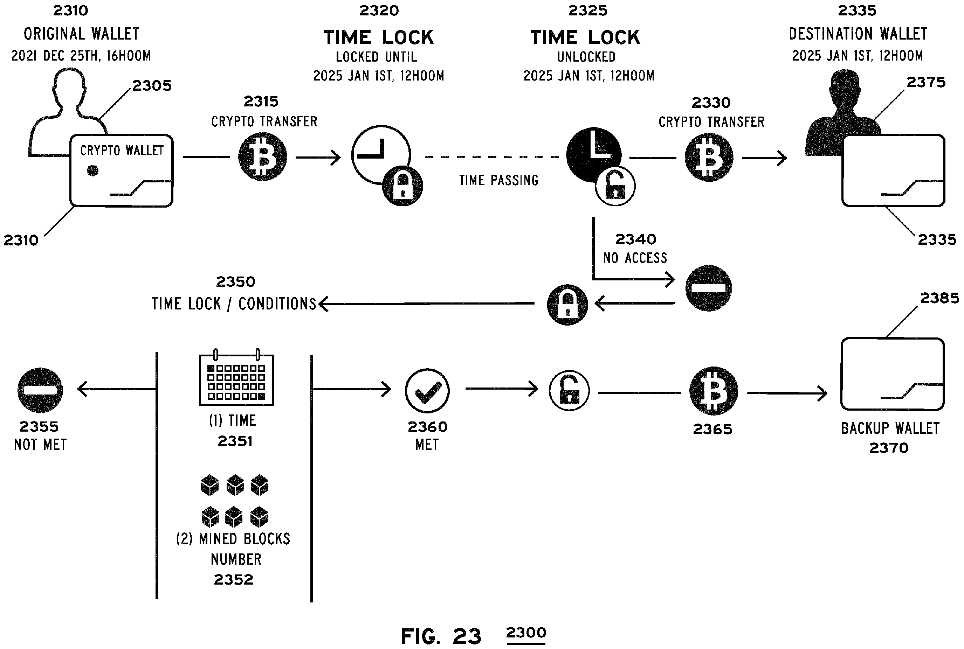

FIGS. 23, 24, 25, 26, and 27 are diagrams that together show processes for smart contracts (e.g., which involves conditional transfers of currency), in accordance with at least one embodiment of the present disclosure.
FIG. 23 is a diagram illustrating a process for a smart contract, which involves a conditional transfer (e.g., a timed-lock transfer in terms of meeting a designated calendar date) of currency (e.g., a digital currency), in accordance with at least one embodiment of the present disclosure.

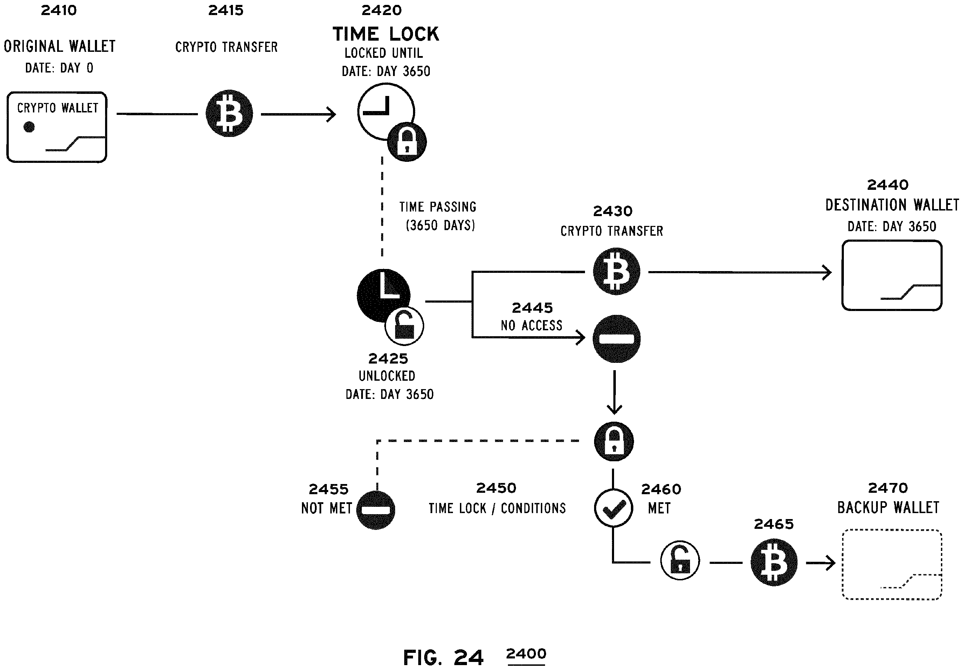

FIG. 24 is a diagram illustrating a process for a smart contract, which involves a conditional transfer (e.g., a timed-lock transfer in terms of passage of a designated number of days) of currency (e.g., a digital currency), in accordance with at least one embodiment of the present disclosure.

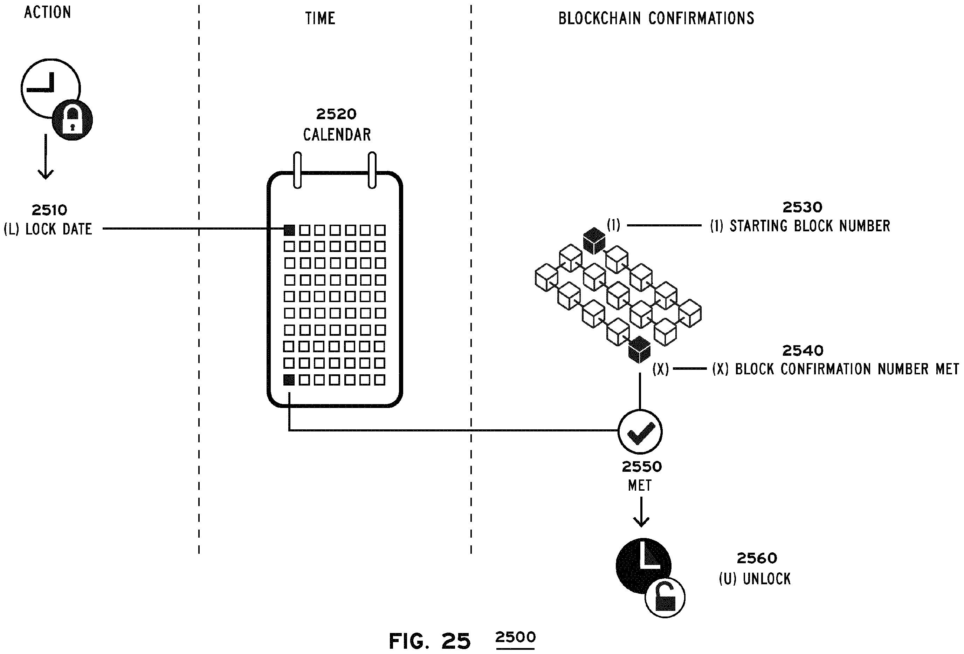

FIG. 25 is a diagram illustrating a process for a smart contract, which involves confirming that a condition (e.g., meeting a designated calendar date) for a conditional transfer of currency (e.g., a digital currency) has been met, in accordance with at least one embodiment of the present disclosure.

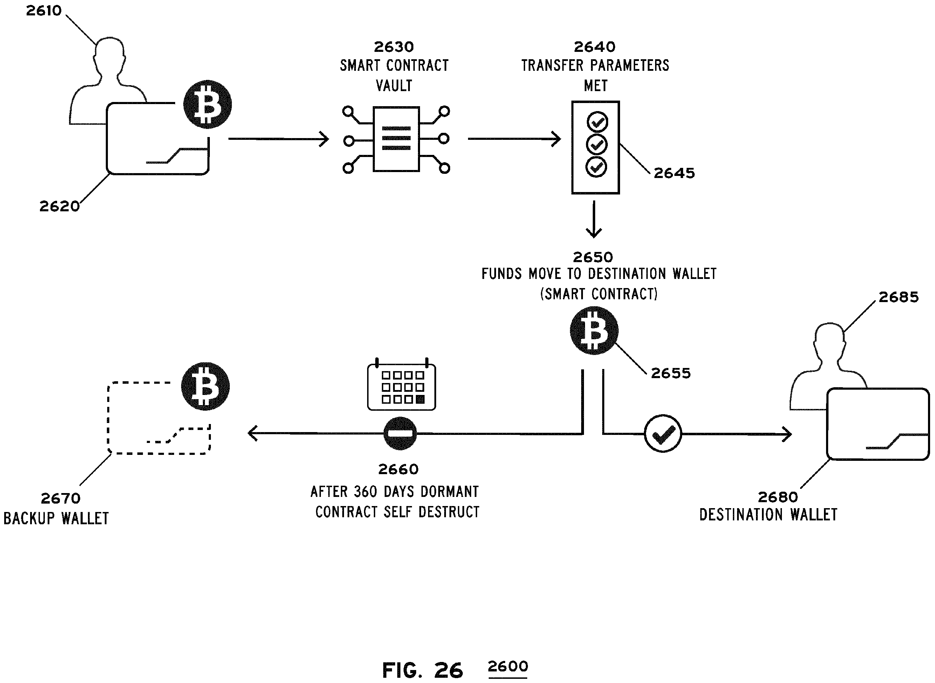

FIG. 26 is a diagram illustrating a process for smart contract, which involves a conditional transfer (e.g., a conditional transfer in terms of a plurality of specified conditions) of currency (e.g., a digital currency), in accordance with at least one embodiment of the present disclosure.

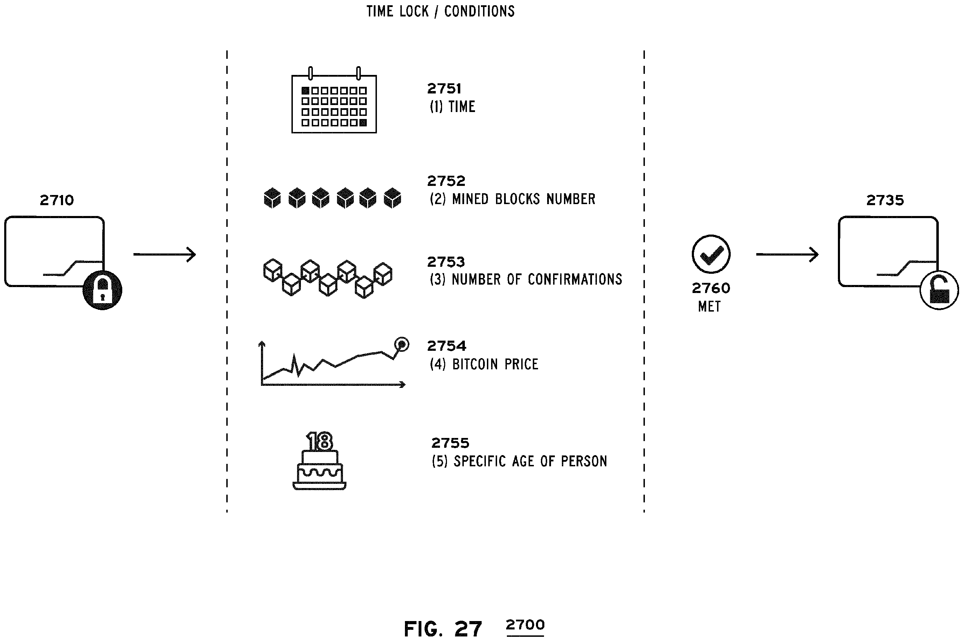

FIG. 27 is a diagram illustrating various different types of conditions that may be employed for the processes for smart contracts, which involve conditional transfers of currency, in accordance with at least one embodiment of the present disclosure.

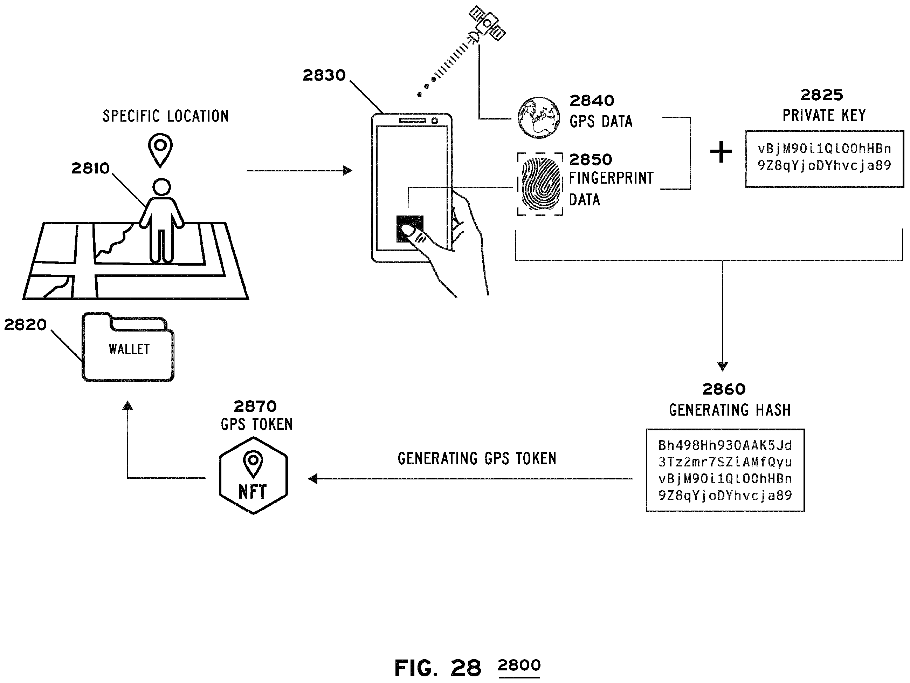

FIGS. 28 to 34 are diagrams that together show processes for secure communications (e.g., textual, voice over Internet Protocol (VOIP), and images), in accordance with at least one embodiment of the present disclosure.
FIG. 28 is a diagram illustrating a process for generating an NFT for secure communications (e.g., voice and/or textual messaging), in accordance with at least one embodiment of the present disclosure.

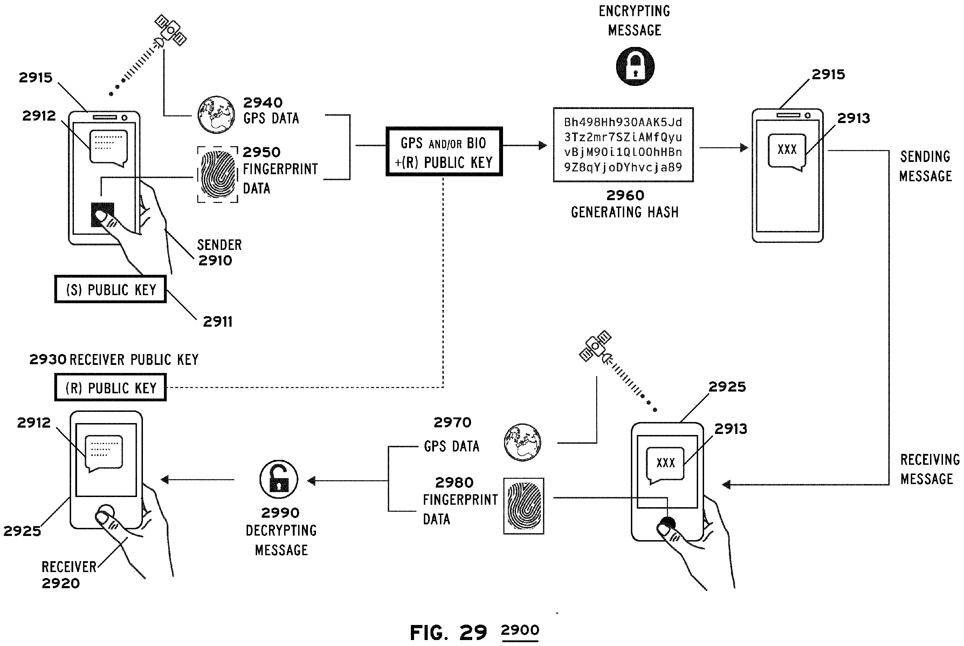

FIG. 29 is a diagram illustrating a process for utilizing a combination of geolocation data and biometric data for secure communications (e.g., textual messaging), in accordance with at least one embodiment of the present disclosure.

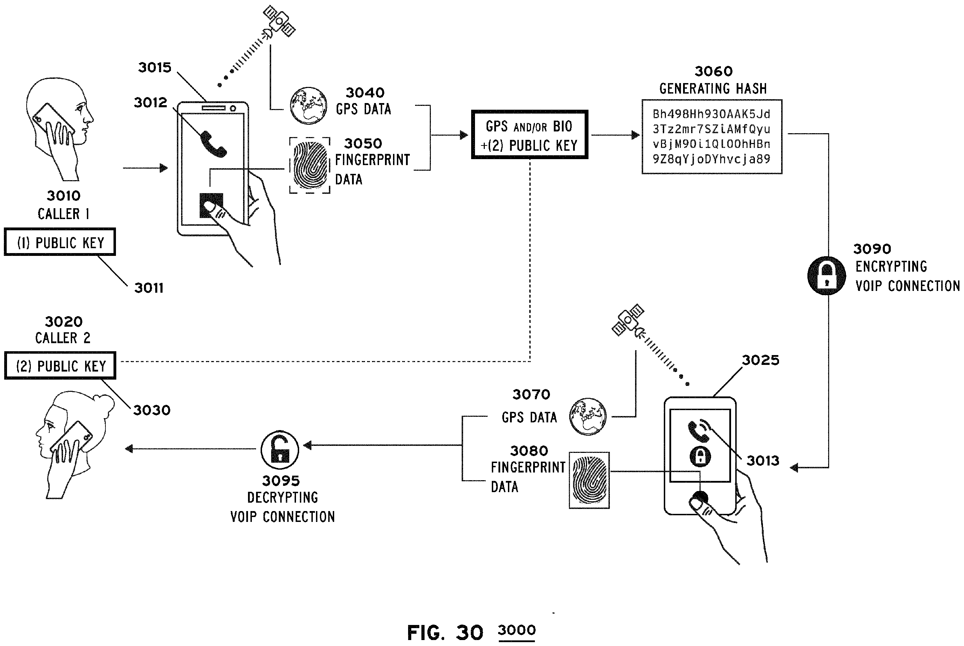

FIG. 30 is a diagram illustrating a process for utilizing a combination of geolocation data and biometric data for secure communications (e.g., VOIP), in accordance with at least one embodiment of the present disclosure.

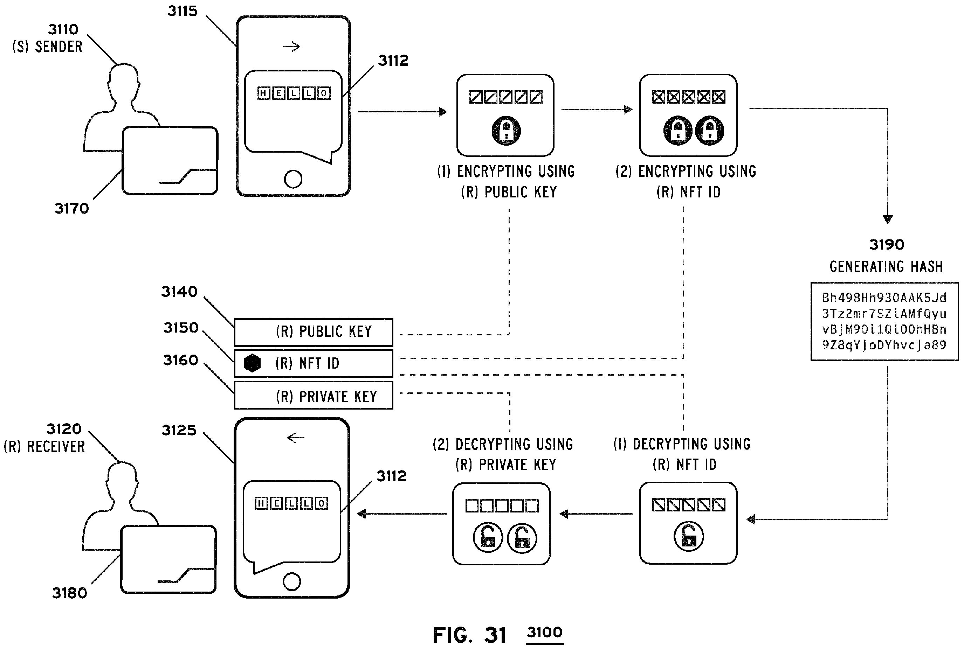

FIG. 31 is a diagram illustrating a process for utilizing NFTs for secure communications (e.g., textual messaging), in accordance with at least one embodiment of the present disclosure.

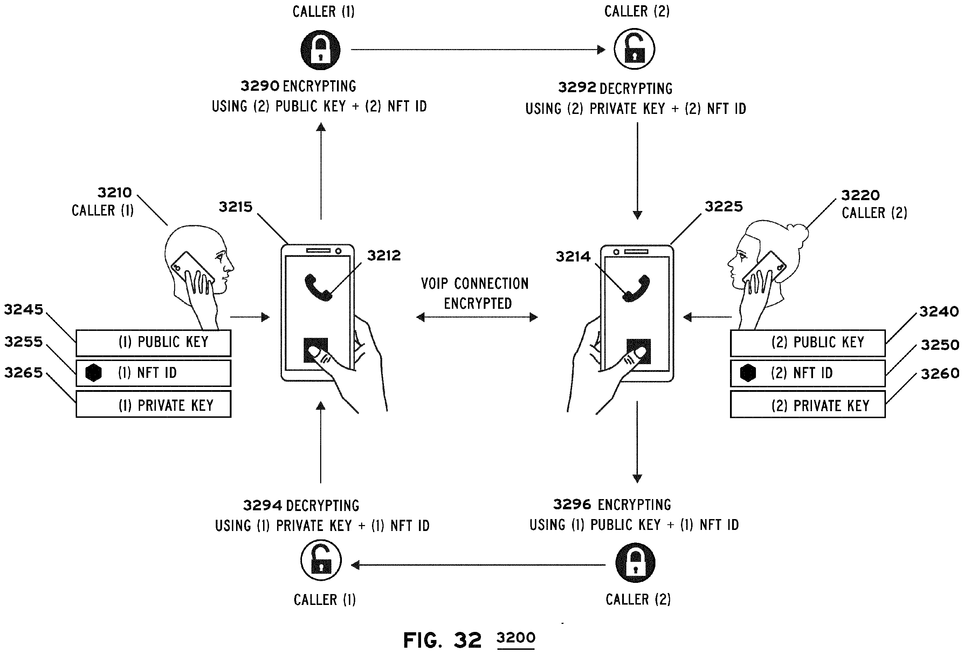

FIG. 32 is a diagram illustrating a process for utilizing NFTs for secure communications (e.g., VOIP), in accordance with at least one embodiment of the present disclosure.

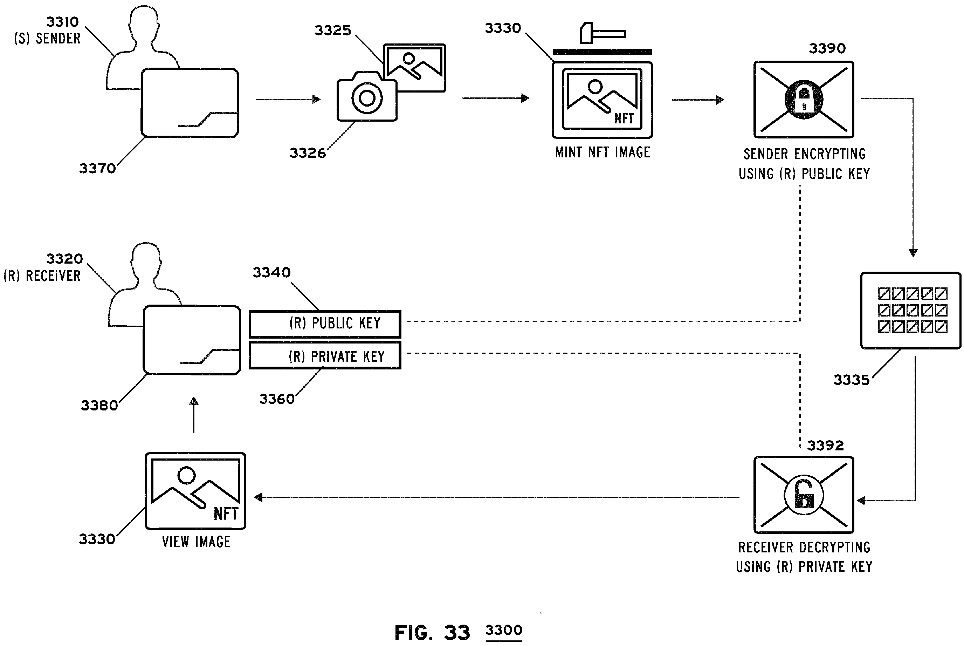

FIG. 33 is a diagram illustrating a process for secure communications (e.g., images), in accordance with at least one embodiment of the present disclosure.

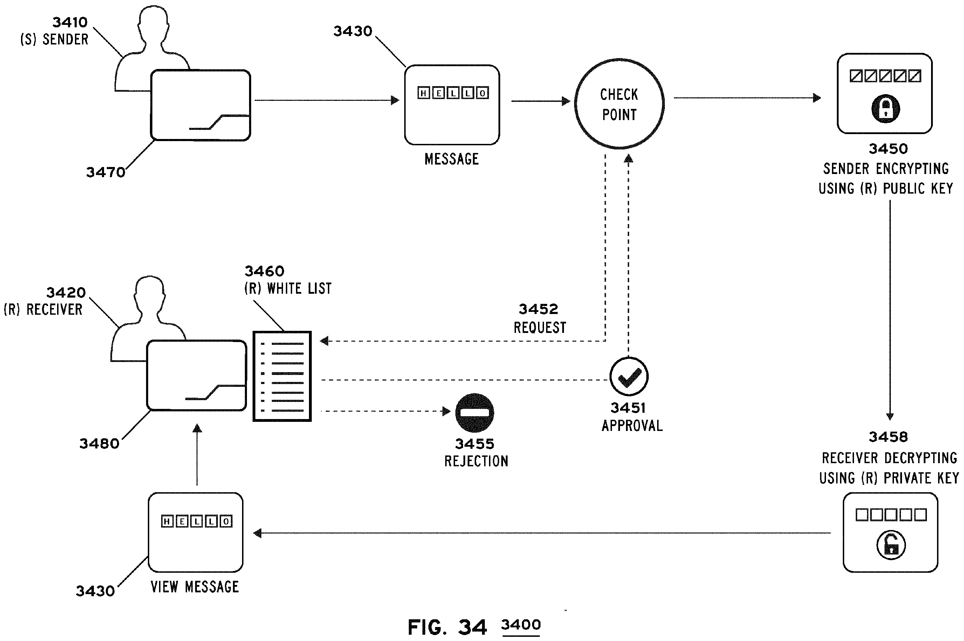

FIG. 34 is a diagram illustrating a process for utilizing a white list for secure communications (e.g., textual messaging), in accordance with at least one embodiment of the present disclosure.

### DESCRIPTION

The methods and apparatus disclosed herein provide an operative system for biometric digital signature generation for identity verification. In one or more embodiments, the system provides biometric digital signature generation, identity verification, and settlements verification for distributed ledgers. In particular, the system of the present disclosure generates a biometric digital signature for a user by hashing with a fuzzy hash algorithm (or alternatively a hash algorithm (e.g., a non-fuzzy hash algorithm)) biometric data from the user, where the biometric digital signature may be used for identity verification of the user that can be utilized for settlements verification for distributed ledgers. It should be noted that, a cryptographic hash function has certain properties, which make it suitable for use in cryptography. A hash algorithm (e.g., a non-fuzzy hash algorithm) maps data of an arbitrary size to a bit string of a fixed size (e.g., a hash). Conversely, a fuzzy hash algorithm maps data of an arbitrary size to a bit string of a non-fixed size (e.g., a hash).

The system of the present disclosure solves the problem in digital signature creation where the source (e.g., user) able to create and protect their digital signature originating from their own biometric data. In one or more embodiments, the system of the present disclosure employs the use of a fuzzy hash algorithm (or alternatively a hash algorithm (e.g., a non-fuzzy hash algorithm)) to create the digital signature from the biometric data. Using a fuzzy hash algorithm (conversely to a hash algorithm (e.g., a non-fuzzy hash algorithm)), the obtained biometric data from the source does not need to be one-hundred (100) percent accurate, as the fuzzy hash creates a digital signature without requiring 100 percent of the biometric data to be accurate.

Fuzzy hash digital signature generation improves privacy and security when multiple transactions are required from the biometric source on a public ledger by allowing the generation of new digital signatures and comparing them to the original digital signature that is stored on the distributed ledgers.

In the following description, numerous details are set forth in order to provide a more thorough description of the system. It will be apparent, however, to one skilled in the art, that the disclosed system may be practiced without these specific details. In the other instances, well known features have not been described in detail, so as not to unnecessarily obscure the system.

Embodiments of the present disclosure may be described herein in terms of functional and/or logical components and various processing steps. It should be appreciated that such components may be realized by any number of hardware, software, and/or firmware components configured to perform the specified functions. For example, an embodiment of the present disclosure may employ various integrated circuit components (e.g., memory elements, digital signal processing elements, logic elements, look-up tables, or the like), which may carry out a variety of functions under the control of one or more processors, microprocessors, or other control devices. In addition, those skilled in the art will appreciate that embodiments of the present disclosure may be practiced in conjunction with other components, and that the systems described herein are merely example embodiments of the present disclosure.

For the sake of brevity, conventional techniques and components related to identity verification, and other functional aspects of the system (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in one or more embodiments of the present disclosure.

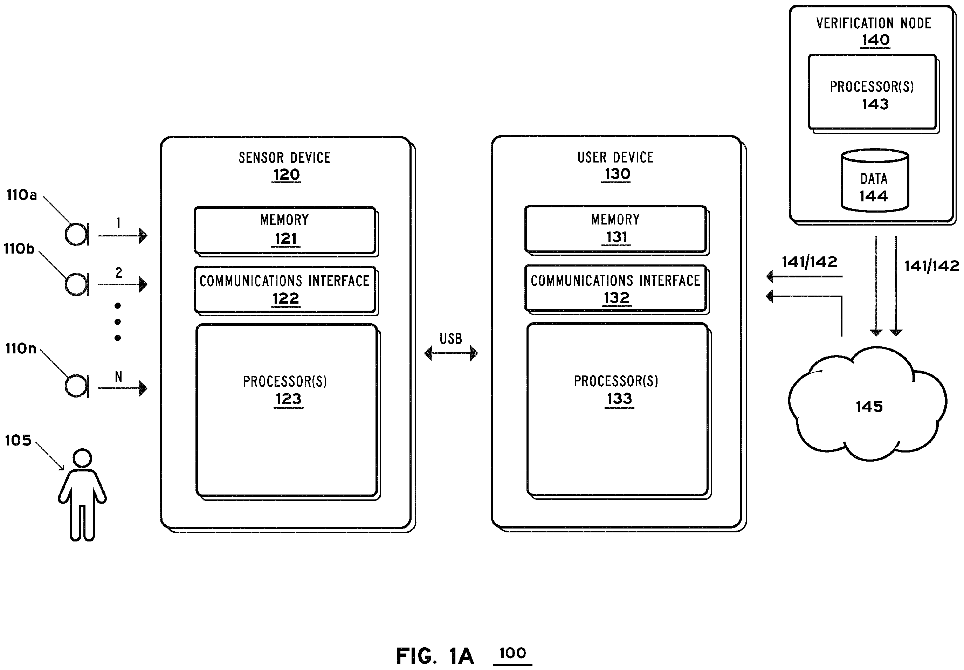

FIG. 1A is a diagram showing the disclosed system 100 for biometric digital signature generation for identity verification of a user 105, in accordance with at least one embodiment of the present disclosure. In this figure, sensors 110a-110n are shown to be communicatively connected (via wire and/or wirelessly) to a sensor device 120. The sensor device 120 comprises a processor(s) 123, a communications interface 122, and memory 121. It should be noted that in other embodiments, the sensor device 120 may comprise more or less numbers of components than as shown in FIG. 1A. In one or more embodiments, the sensors 110a-110n may comprise various different types of sensors including, but not limited to, image scanning devices, chemical detection devices, temperature sensors, humidity sensors, elevation sensors, direction sensors, and/or Global Position System (GPS) signal receivers. In addition, in some embodiments, there may be more or less numbers of sensors 110a-110n as is shown in FIG. 1A.

Also, in FIG. 1A, a user device 130 is shown to comprise a processor(s) 133, a communications interface 132, and memory 131. Similar to the sensor device 120, in other embodiments, the user device 130 may comprise more or less numbers of components than as shown in FIG. 1A. The sensor device 120 is communicatively connected (via wire (e.g., universal serial bus (USB)) and/or wirelessly) to the user device 130. In one or more embodiments, the user device 130 is a computing device associated with the user 105. Various different types of computing devices may be employed for the user device 130 of the disclosed system 100 including, but not limited to, a smart phone, a tablet device, a personal computer, a laptop computer, a smart watch, a smart television (TV), a car, or a computing device (e.g., any computing device that is capable of running an operating system, such as Android, OSX, Windows, Unix, or future operating systems).

The user device 130 is communicatively connected (via wire and/or wirelessly), for example over the internet 145 (and/or other public and/or private network(s) and/or intranet(s)), to a node (e.g., a verification node) 140. The node 140 is shown to comprise a processor(s) 143 and a database 144. In other embodiments, the node 140 may comprise more or less numbers of components than as shown in FIG. 1A. In one or more embodiments, the node 140 is a computing device, such as a server. It should be noted that, in one or more embodiments, various different types of computing devices may be employed for the node 140. In some embodiments, the user device 130 may comprise at least one of the sensors 110a-110n, the sensor device 120, and/or the node (e.g., verification node) 140.

During operation of the disclosed system 100, at least one sensor 110a-110n senses biometric information from the user 105. Various different types of biometric information may be sensed from the user 105 including, but not limited to, fingerprint information, information from a blood sample (e.g., a deoxyribonucleic acid (DNA) sequence), facial feature information, isotopic information from odor, eye feature information, audio information from voice, a three-dimensional (3D) surface scan of at least a portion of the user 105, and/or a two-dimensional (2D) surface scan of at least the portion of the user 105.

After at least one sensor 110a-110n has sensed biometric information from the user 105, at least one sensor 110a-110n transmits (via wire and/or wirelessly) the biometric information to the sensor device 120. After the sensor device 120 receives the biometric information of the user 105, at least one processor 123 converts the biometric information (e.g., in an analog data format) to biometric data (e.g., in a digital data format, such as a binary number and/or hexadecimal number). In one or more embodiments, the sensor device 120 may store the biometric data in memory 121. After the sensor device 120 as converted the biometric information into biometric data, a communications interface 122 (e.g., which may contain a transmitter and/or receiver) of the sensor device 120 transmits (via wire and/or wirelessly) (e.g., via USB) the biometric data for the user 105 to the user device 130.

After the communications interface 133 (e.g., which may contain a transmitter and/or receiver) of the user device 130 receives the biometric data for the user 105, at least one processor 133 of the user device 130 utilizes a fuzzy hash algorithm (or alternatively a hash algorithm) to hash at least a portion of the biometric data to generate a biometric digital signature for the user 105. In one or more embodiments, the user device 130 utilizes an elliptical curve digital signature algorithm (ECDSA) to hash at least a portion of the biometric data to generate a biometric digital signature for the user 105. It should be noted that various different types algorithms (e.g., hash algorithms and fuzzy hash algorithms) may be employed by the user device 130 of the disclosed system 100 to hash including, but not limited to, a SHA-256 algorithm, a Merkle-Damgard algorithm, a MD5 algorithm, a SHA-1 algorithm, a SHA-2 algorithm, a RACE Integrity Primitives Evaluation Message Digest-160 (RIPEMD-160) algorithm, a Whirlpool algorithm, and a BLAKE2 algorithm.

In addition, it should be noted that, in one or more embodiments, in addition to biometric data from the user, at least a portion of additional identifying information for the user 105 may be hashed (along with at least a portion of the biometric data) by at least one processor 133 utilizing a fuzzy hash algorithm or a hash algorithm to generate the biometric digital signature for the user 105. Various different types of additional identifying information for the user 105 that may be used include, but are not limited to, location information, temperature information, humidity information, date information, time information, elevation information, range information, and/or personal information (e.g., date of birth and/or at least a portion of a social security number).

In one or more embodiments, the biometric digital signature for the user 105 may be utilized as a private identity key for user 105. The user 105 may use this private identity key to be able to conduct transactions, access data, and/or participate in activities. In at least one embodiment, the user device 130 stores the biometric digital signature in memory 131.

In one or more embodiments, when a user 105 desires to conduct a transaction (e.g., make a banking transaction, transfer assignment of a data block of a blockchain from the user 105 to a beneficiary and/or allow the user 105 to transfer ownership of property from the user 105 to a beneficiary), access data (e.g., obtain medical records for the user 105 and/or obtain travel documentation for the user), and/or participate in activities (e.g., vote on behalf of the user 105); the user 105 may be verified by having the biometric digital signature validated. For the user 105 to be verified using this process, the communications interface 132 of the user device 130 first transmits (via wire and/or wirelessly), for example over the internet 145 (and/or other public and/or private network(s) and/or intranet(s)), the biometric digital signature of the user 105 to the node (e.g., a verification node) 140. At least one processor 143 of the verification node 140 compares the biometric digital signature for the user 105 to a previous biometric digital signature for the user 105. The previous biometric digital signature for the user 105 is a biometric digital signature that was previously generated and validated for the user 105 in the past.

In one or more embodiments, the database 144 comprises at least one database. In one or more embodiments, at least one of the databases of database 144 of the node 140 comprises the previous biometric digital signature for the user 105. In at least one embodiment, at least one of the databases of database 144 comprises biometric digital signatures for a plurality of different users (including the user 105). In at least one embodiment, at least one of the databases of the database 144 is a distributed ledger (e.g., which comprises a blockchain).

After at least one processor 143 has compared the biometric digital signature for the user 105 to the previous biometric digital signature for the user 105, if at least one processor 143 determines that the biometric digital signature for the user 105 is identical to the previous biometric digital signature for the user 105, at least one processor 143 then validates the biometric digital signature, which verifies the user 105. In one or more embodiments, at least one processor 143 determines that the biometric digital signature for the user 105 is identical to the previous biometric digital signature for the user 105, when at least one processor 143 determines that the biometric digital signature for the user 105 is one hundred (100) percent the same as (e.g., identical to) the previous biometric digital signature for the user 105.

After at least one processor 143 determines that the biometric digital signature for the user 105 is identical to the previous biometric digital signature for the user 105, at least one processor 143 generates a confirmation verification signal 141, which indicates that the biometric digital signature has been validated. The node 140 then transmits (via wire and/or wirelessly), for example via the internet 145, the confirmation verification signal 141 to the communications interface 132 of the user device 130 to notify the user 105 that the biometric digital signature has been validated and, thus, that the user 105 has been verified. After the user 105 has been verified, the user 105 is able to conduct the transaction (e.g., transfer assignment of a block in a blockchain), access the data, and/or participate in the activity.

However, if at least one processor 143 determines that the biometric digital signature for the user 105 is not identical to the previous biometric digital signature for the user 105, at least one processor 143 generates an abort verification signal 142, which indicates that the biometric digital signature has not been validated. The node 140 then transmits (via wire and/or wirelessly), for example via the internet 145, the abort verification signal 142 to the communications interface 132 of the user device 130 to notify the user 105 that the biometric digital signature has not been validated and, thus, that the user 105 has not been verified. Since the user 105 has not been verified, the user 105 is unable to conduct the transaction, access the data, and/or participate in the activity. As previously mentioned above, it should be noted that in some embodiments, the user device 130 comprises the node 140.

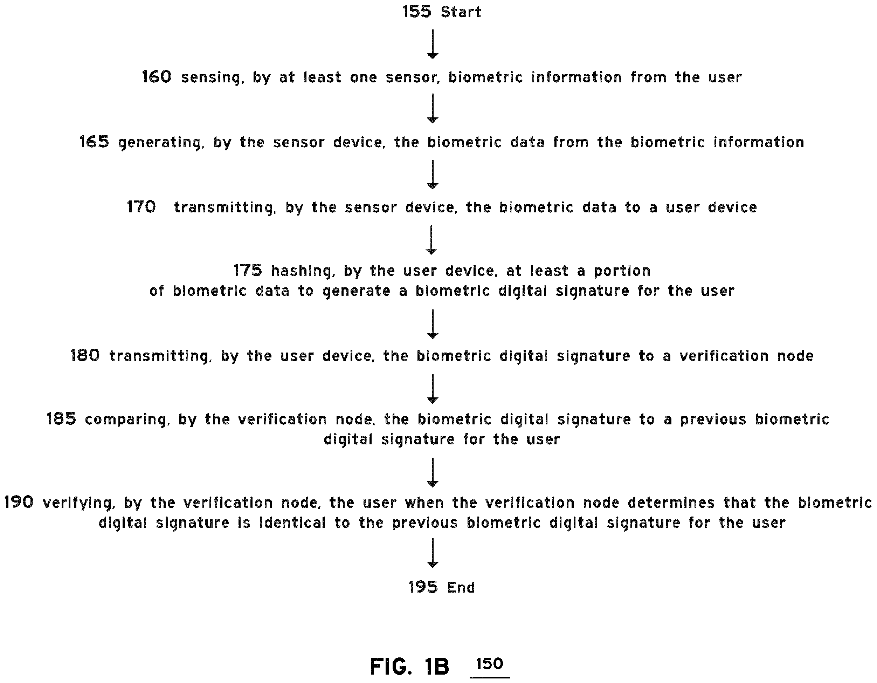

FIG. 1B is a flow chart showing the disclosed method 150 for biometric digital signature generation for identity verification of a user, in accordance with at least one embodiment of the present disclosure. At the start 155 of the method 150, at least one sensor senses biometric information from the user 160. Then, a sensor device generates biometric data from the biometric information 165. The sensor device then transmits the biometric data to a user device 170. The user device 170 then hashes at least a portion of the biometric data to generate a biometric digital signature for the user 175. Then, the user device transmits the biometric digital signature to a verification node 180. The verification node then compares the biometric digital signature to a previous biometric digital signature for the user 185. Then, the verification node verifies the user when the verification node determines that the biometric digital signature is identical to the previous biometric digital signature for the user 190. Then, the method 150 ends 195.

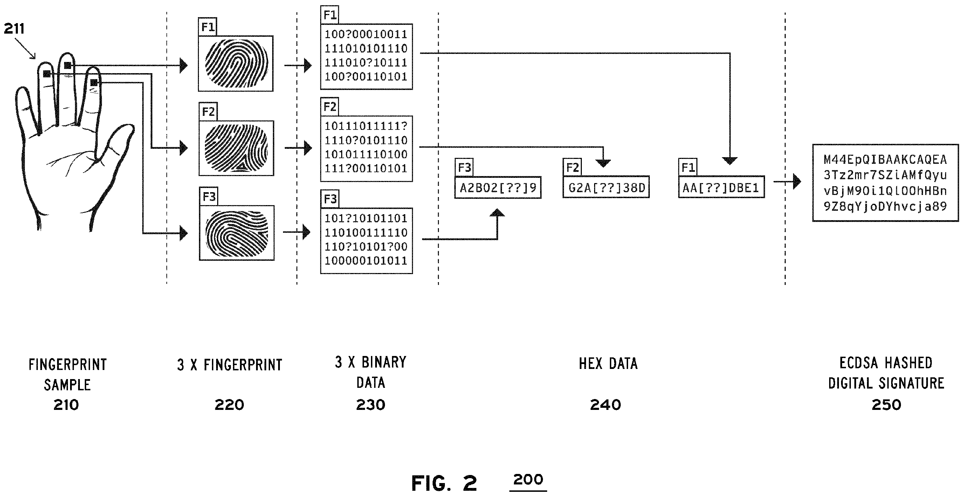

FIG. 2 is a diagram illustrating the process 200 of hashing biometric data 240 obtained from fingerprints 220 of a user 105 to generate a biometric digital signature 250 for the user 105, in accordance with at least one embodiment of the present disclosure. In this figure, a fingerprint sample 210 comprising images of fingerprints 220 (e.g., at least three fingerprints) (e.g., biometric information) is first obtained (e.g., sensed and/or imaged) from the fingers of the user 105. The images of the fingerprints 220 (e.g., biometric information, e.g., in an analog data format) is converted to biometric data (e.g., digital data, such as a binary number 230 and/or a hexadecimal number 240). At least a portion of the biometric data (e.g., a binary number 230 or a hexadecimal number 240) is hashed utilizing a fuzzy hash algorithm (or alternatively a hash algorithm) to generate a biometric digital signature 250 for the user 105.

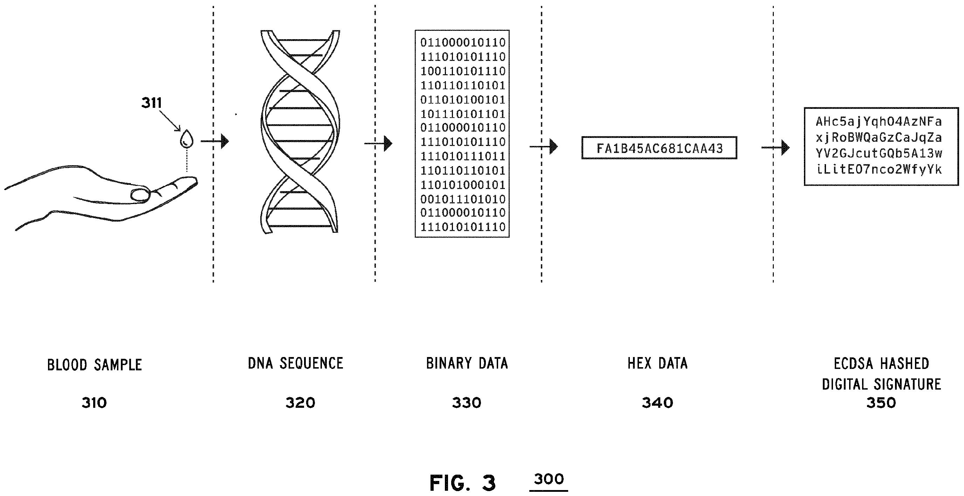

FIG. 3 is a diagram illustrating the process 300 of hashing biometric data 340 obtained from blood 311 of a user 105 to generate a biometric digital signature 350 for the user 105, in accordance with at least one embodiment of the present disclosure. In this figure, a blood sample 310 is first obtained by extracting blood 311 from a finger of the user 105. At least one chemical detector device (e.g., sensor) determines at least a portion of the DNA sequence 320 (e.g., biometric information, e.g., comprising nucleotides) of the blood 311. The DNA sequence 320 (e.g., biometric information, e.g., comprising nucleotides) is converted to biometric data (e.g., digital data, such as a binary number 330 and/or a hexadecimal number 340). At least a portion of the biometric data (e.g., a binary number 330 or a hexadecimal number 340) is hashed utilizing a fuzzy hash algorithm (or alternatively a hash algorithm) to generate a biometric digital signature 350 for the user 105.

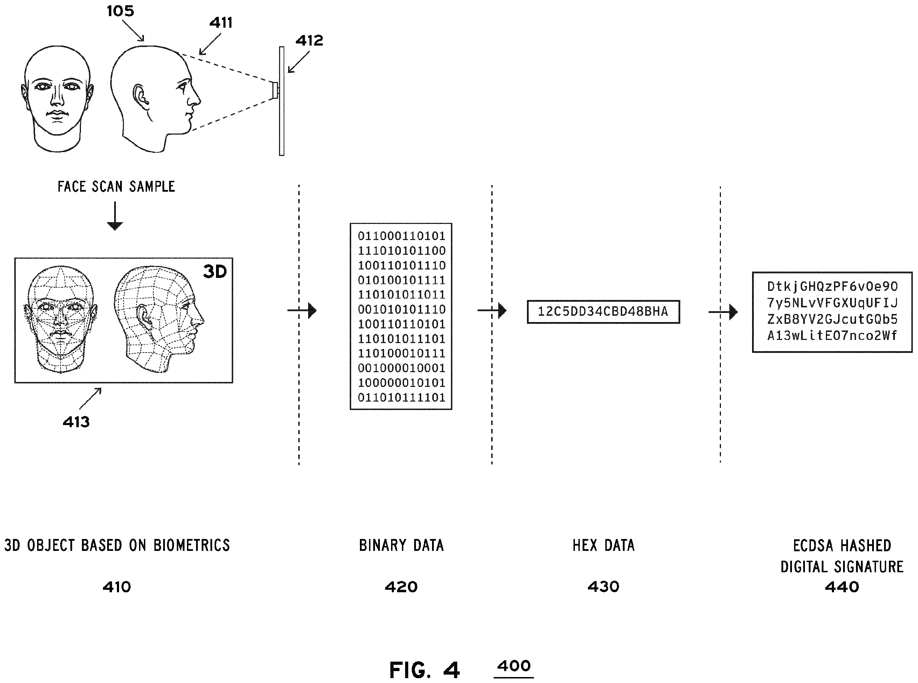

FIG. 4 is a diagram illustrating the process 400 of hashing biometric data 340 obtained from a facial scan 410 of a user 105 to generate a biometric digital signature 350 for the user 105, in accordance with at least one embodiment of the present disclosure. In this figure, a facial scan 413 (e.g., an image generated from a three-dimensional object based on biometrics 410) (e.g., biometric information) is first obtained (e.g., sensed and/or imaged) by scanning, with an image scanner 412, at least a portion of a face 411 of the user 105. The facial scan 413 (e.g., biometric information) is converted to biometric data (e.g., digital data, such as a binary number 420 and/or a hexadecimal number 430). At least a portion of the biometric data (e.g., a binary number 420 or a hexadecimal number 430) is hashed utilizing a fuzzy hash algorithm (or alternatively a hash algorithm to generate a biometric digital signature 440 for the user 105.

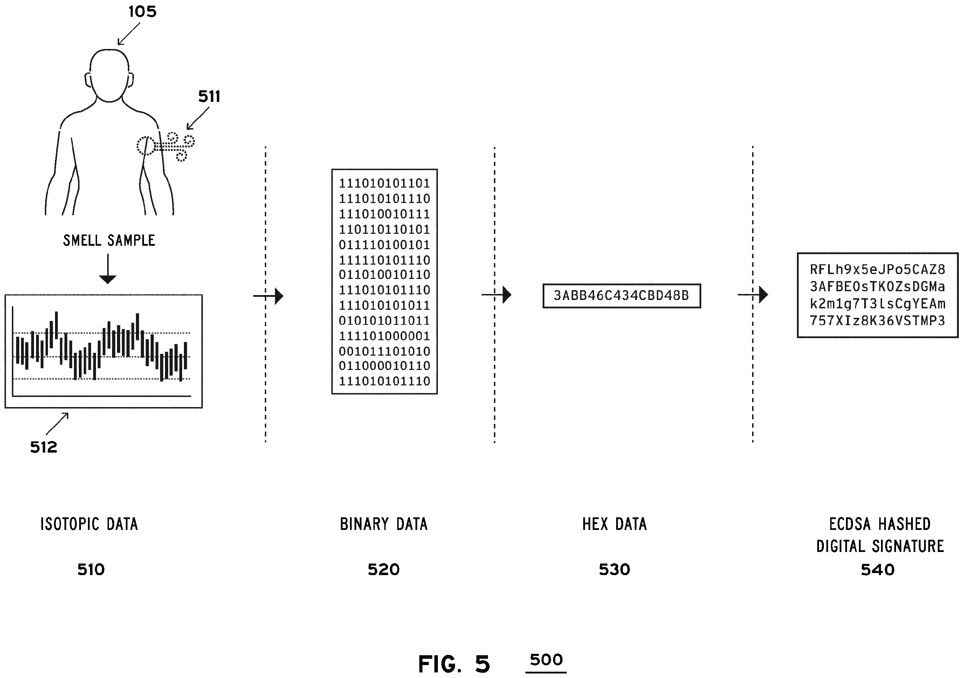

FIG. 5 is a diagram illustrating the process 500 of hashing biometric data 530 obtained from a scent 511 of a user 105 to generate a biometric digital signature 540 for the user 105, in accordance with at least one embodiment of the present disclosure. In this figure, an odor (e.g., scent, pheromone) sample 511 is first sensed from the user 105. At least one chemical detector device (e.g., sensor) determines a chemical composition (e.g., biometric information, e.g., comprising isotopic data 510) 512 of the odor sample 511. The chemical composition (e.g., biometric information, e.g., comprising isotopic data 510) 512 is converted to biometric data (e.g., digital data, such as a binary number 520 and/or a hexadecimal number 530). At least a portion of the biometric data (e.g., a binary number 520 or a hexadecimal number 530) is hashed utilizing a fuzzy hash algorithm (or alternatively a hash algorithm) to generate a biometric digital signature 540 for the user 105.

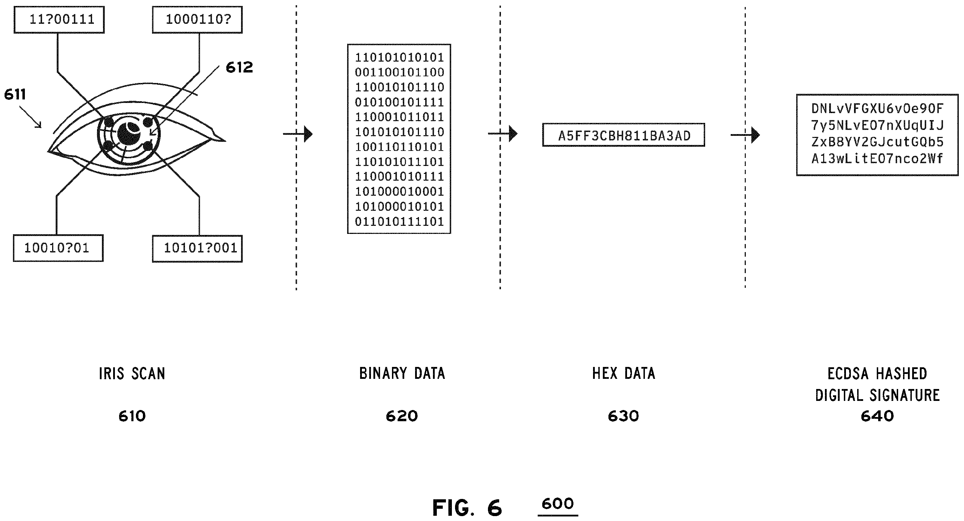

FIG. 6 is a diagram illustrating the process 600 of hashing biometric data 630 obtained from an eye scan (e.g., iris scan and/or retina scan) 610 of a user 105 to generate a biometric digital signature 640 for the user 105, in accordance with at least one embodiment of the present disclosure. In this figure, an eye 611 of the user 105 is scanned with a scanner (e.g., an imager, a sensor) to obtain an iris scan (e.g., biometric information) 610 of at least a portion of the iris 612 of the user 105. The iris scan 610 (e.g., biometric information) is converted to biometric data (e.g., digital data, such as a binary number 620 and/or a hexadecimal number 630). At least a portion of the biometric data (e.g., a binary number 620 or a hexadecimal number 630) is hashed utilizing a fuzzy hash algorithm (or alternatively a hash algorithm) to generate a biometric digital signature 640 for the user 105.

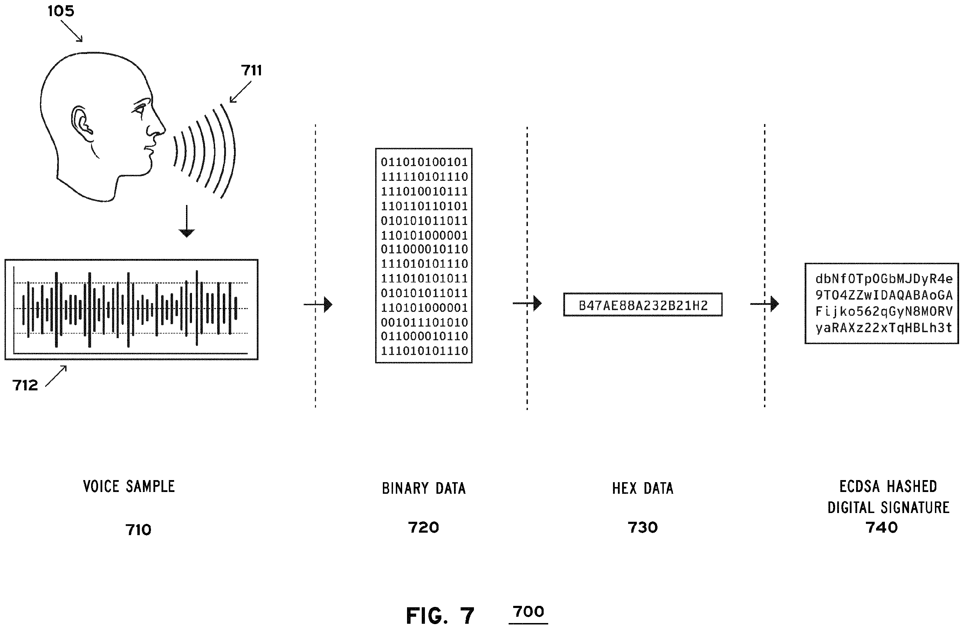

FIG. 7 is a diagram illustrating the process 700 of hashing biometric data 730 obtained from a voice 711 of a user 105 to generate a biometric digital signature 740 for the user 105, in accordance with at least one embodiment of the present disclosure. In this figure, a voice sample 710 is obtained by sensing a voice 711 from the user 105. At least one audio receiver device (e.g., sensor, microphone) senses (e.g., records) the voice 711 (e.g., biometric information, e.g., comprising audio information 712) from the user 105. The biometric information (e.g., comprising audio information 712) of the voice 711 is converted to biometric data (e.g., digital data, such as a binary number 720 and/or a hexadecimal number 730). At least a portion of the biometric data (e.g., a binary number 720 or a hexadecimal number 730) is hashed utilizing a fuzzy hash algorithm (or alternatively a hash algorithm) to generate a biometric digital signature 740 for the user 105.

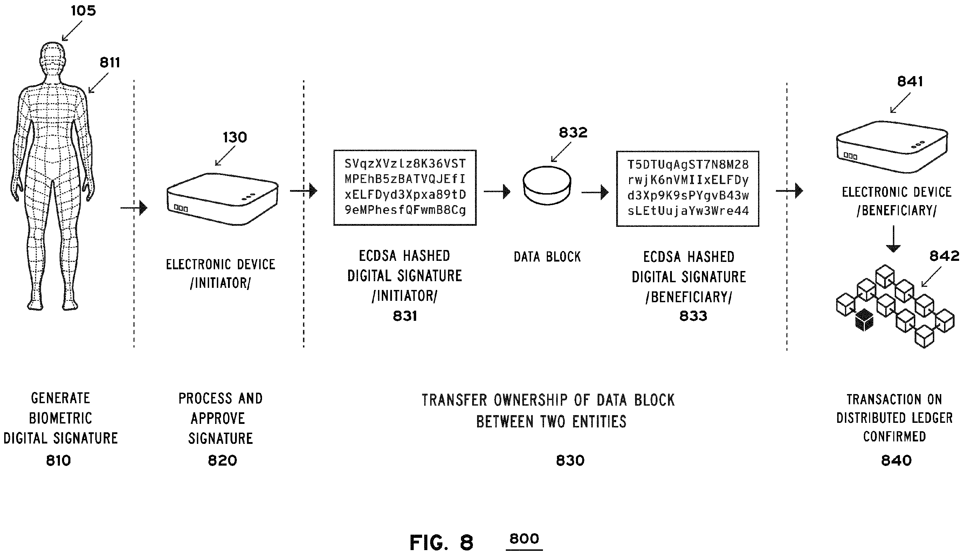

FIG. 8 is a diagram illustrating the process 800 of utilizing biometric digital signatures 831, 833 for the transfer of a property 832 between an initiator (e.g., a user) and a beneficiary, in accordance with at least one embodiment of the present disclosure. In this figure, a user (e.g., initiator) 105 desires to transfer a data block 832, which is assigned to the user (e.g., initiator) 105, on a blockchain distributed ledger 842 to a beneficiary. A biometric digital signature 831 is first generated 810 for the user (e.g., initiator) 105. For the generation of a biometric digital signature 831, biometric information (e.g., a three-dimensional (3D) body scan) 811 is obtained from the user (e.g., an initiator) 105. An electronic device (e.g., a user device) 130 associated with the user (e.g., an initiator) 105 hashes, utilizing a fuzzy hash algorithm (or alternatively a hash algorithm), biometric data from the biometric information 811 to generate a biometric digital signature 831 for the user (e.g., initiator) 105. Also, a biometric digital signature 833 for the beneficiary is generated and provided by an electronic device (e.g., user device) 841 associated with the beneficiary.

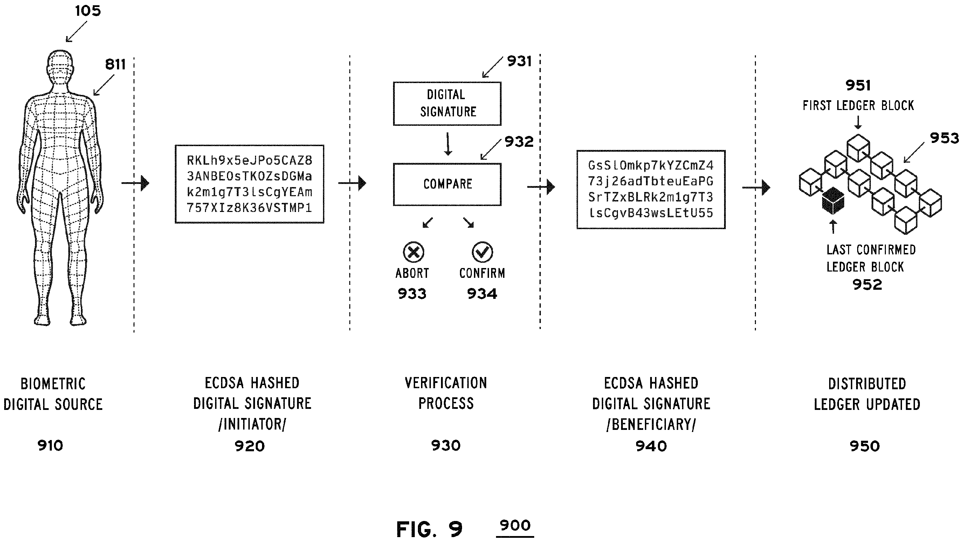

After the biometric digital signature 831 is validated and the user (e.g., initiator) 105 is verified (refer to FIG. 9 for that process), the data block 832 is transferred on the blockchain 842 from the user (e.g., initiator) 105 to the beneficiary, and the transaction on the distributed ledger is confirmed 840. For the transfer of the data block 832, the biometric digital signature 831 for the user (e.g., initiator) 105 will no longer be assigned to the data block 832, and instead the biometric digital signature 833 for the beneficiary will be assigned to that data block 832.

FIG. 9 is a diagram illustrating the process 900 of verifying a user (e.g., initiator) 105 by validating the biometric digital signature 920 for the user 105 to perform a transaction desired by the user 105, in accordance with at least one embodiment of the present disclosure. During the verification process 930, the generated biometric digital signature 920 for the user (e.g., initiator) 105 is compared 932 to a previous biometric digital signature 931 for the user (e.g., initiator) 105. If the generated biometric digital signature 920 for the user (e.g., initiator) 105 is found to be identical to the previous biometric digital signature 931 for the user (e.g., initiator) 105, the generated biometric digital signature 920 is confirmed 934, and the distributed ledger is updated 950 by transferring a data block 951 of a blockchain 953 from the user (e.g., initiator) 105 to a beneficiary. For the transfer of the data block 951, the biometric digital signature 920 for the user (e.g., initiator) 105 will no longer be assigned to the data block 951, and instead the biometric digital signature 940 for the beneficiary will be assigned to that data block 951.

However, if the generated biometric digital signature 920 for the user (e.g., initiator) 105 is not found to be identical to the previous biometric digital signature 931 for the user (e.g., initiator) 105, the generated biometric digital signature 920 is aborted 933, and the user 105 will not be able to conduct the transaction.

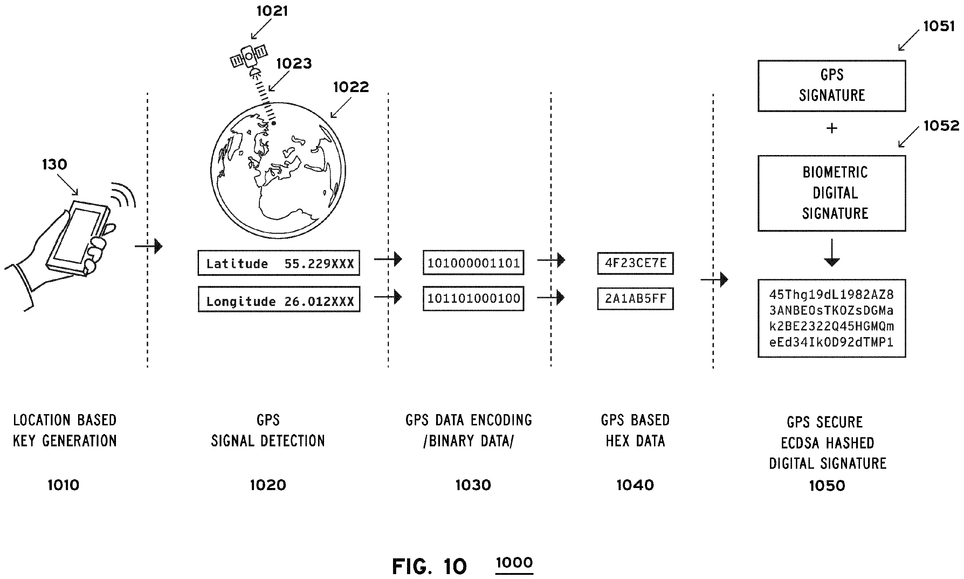

FIG. 10 is a diagram illustrating the process 1000 of hashing location data (e.g., latitude, longitude) 1051 for a user 105 along with biometric data 1052 obtained from a user 105 to generate a biometric digital signature 1050 for the user 105, in accordance with at least one embodiment of the present disclosure. In this figure, a user device 130 of the user 105 obtains location information (e.g., latitude and longitude) for the user 105, for example via Global Positioning System (GPS) signal detection 1020 by receiving a GPS signal 1023 radiating from a GPS satellite 1021 onto Earth 1022. The location information (e.g., latitude and longitude) is converted into a binary number 1030 (e.g., the GPS data is encoded into binary data 1030) and/or a hexadecimal number 1040 (e.g., the GPS data is hexadecimal 1040). It should be noted that, in other embodiments, the user device 130 may obtain location information (e.g., latitude and longitude) for the user 105 by utilizing various different positioning systems other than GPS including, but not limited to, Global Navigation Satellite System (GLONASS), Galileo, Compass (BeiDou), or Quazi-Zenith Satellite System (QZSS).

The GPS data (e.g., comprising a binary number 1030 and/or a hexadecimal number 1040) is hashed utilizing a hash algorithm or alternatively a fuzzy hash algorithm to generate a GPS signature 1051 for the user 105. In addition, biometric data for the user 105 is hashed utilizing a fuzzy hash algorithm (or alternatively a hash algorithm) to generate a biometric digital signature 1052 for the user 105. The GPS signature 1051 and the biometric digital signature 1052 together form the complete biometric digital signature (e.g., a GPS secure biometric digital signature) 1050 for the user 105.

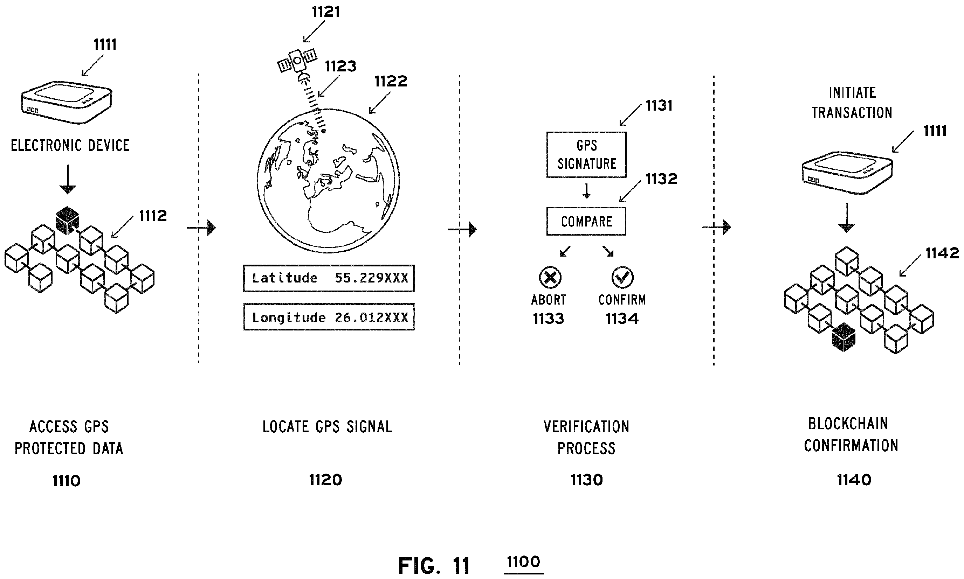

FIG. 11 is a diagram illustrating the process 1100 of verifying the user 105 by validating the satellite (e.g., GPS satellite) signature, which comprises location data (e.g., latitude and longitude), for the user 105 of FIG. 11 to perform a transaction desired by the user 105, in accordance with at least one embodiment of the present disclosure. In this figure, the user 105 wishes to transfer assignment of a data block (e.g., access protected data 1110, such as a data block in a blockchain 1112) to a beneficiary. In order to complete this transaction, the user 105 needs to be verified. For this embodiment, the user 105 is verified by validating the biometric digital signature of the user 105 and validating the location of the user 105. In the embodiment of this figure, the biometric digital signature of the user 105 has already been validated.

In order to validate the location of the user 105, the user device 1111 of the user 105 obtains location information (e.g., latitude and longitude) for the user 105, for example via Global Positioning System (GPS) by receiving a GPS signal 1123 radiating from a GPS satellite 1121 onto Earth 1122 (e.g., locating a GPS signal 1120). The location information (e.g., latitude and longitude) is converted into a binary number (e.g., the GPS data is encoded into binary data) and/or a hexadecimal number (e.g., the GPS data is hexadecimal). The GPS data (e.g., comprising a binary number and/or a hexadecimal number) is hashed utilizing a hash algorithm (or alternatively a fuzzy hash algorithm) to generate a GPS signature 1131 for the user 105.

During the verification process 1130, the generated GPS signature 1131 for the user (e.g., initiator) 105 is compared 1132 to a previous GPS signature 1051 (refer to FIG. 10) for the user (e.g., initiator) 105. If the generated GPS signature 1131 for the user (e.g., initiator) 105 is found to be identical to the previous GPS signature 1051 for the user (e.g., initiator) 105, the generated GPS signature 1131 is confirmed 1134, and the transaction is initiated (e.g., blockchain confirmation 1140) by the distributed ledger being updated by transferring a data block of a blockchain 1142 from the user (e.g., initiator) 105 to a beneficiary.

However, if the generated GPS signature 1131 for the user (e.g., initiator) 105 is not found to be identical to the previous GPS signature 1051 for the user (e.g., initiator) 105, the generated GPS signature 1131 is aborted 1133, and the user 105 will not be able to conduct the transaction.

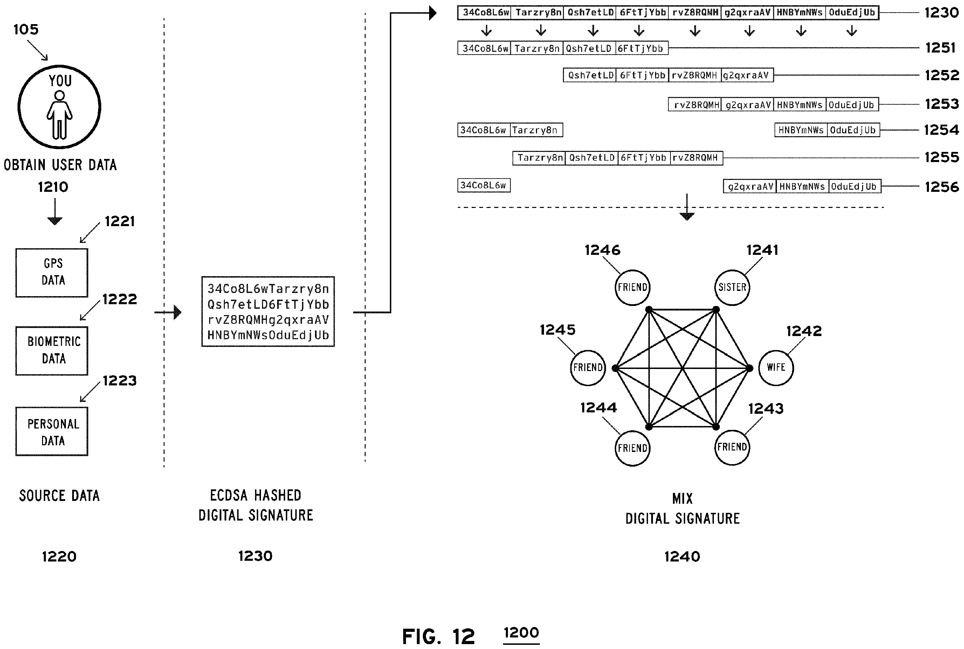

FIG. 12 is a diagram illustrating the process 1200 of storing a portion of a biometric digital signature 1230 for a user ("You") 105 to host biometric digital signatures 1251-1256 held by other people 1241-1246 to generate the host biometric digital signatures 1251-1256 for each of the other people 1241-1246, in accordance with at least one embodiment of the present disclosure. For this embodiment, people 1241-1246, who are related and/or associated with the user 105, may each have a host biometric digital signature 1251-1256 that comprises a portion of the biometric digital signature 1230 for the user 105 so that the user 105 may use their host biometric digital signatures 1251-1256 to reconstruct the complete biometric digital signature 1230 for the user 105.

In this figure, user data (e.g., source data 1220, such as GPS data 1221, biometric data 1222, and/or personal data 1223) is first obtained 1210 from the user 105. The user data (e.g., source data 1220) is hashed using a fuzzy hash algorithm (or alternatively a hash algorithm) to generate a biometric digital signature 1230 for the user 105.

A portion of the biometric digital signature 1230 of the user 105 is stored for each host biometric digital signature 1251-1256 for each of the persons 1241-1246 (e.g., n number of people, e.g., six (6)) to generate a host biometric digital signature 1251-1256 for each of the people 1241-1246, such that a combination of the host biometric digital signatures 1251-1256 for at least a portion of the people (e.g., m number of the people, e.g., four (4)) 1241-1244 comprises all of the biometric digital signature 1230 for the user 105, where m number is a number greater than half of n number.

For example, in one embodiment, the biometric digital signature 1230 of the user 105 comprises 64 characters, and each of the host biometric digital signatures 1251-1256 for the people 1241-1246 comprise a portion of the total number of characters (e.g., 32 characters). As such, for example, each host biometric digital signature 1251-1256 for the people 1241-1246 comprises a total of 32 characters. It should be noted that in other embodiments, the host biometric digital signature 1251-1256 for the people 1241-1246 may each comprise more or less than a total of 32 characters, and/or may each comprise a different number of characters to each other (e.g., half of the host biometric digital signatures 1251-1253 may comprise a total of 30 characters, and the other half of the host biometric digital signatures 1254-1256 may comprise a total of 34 characters).

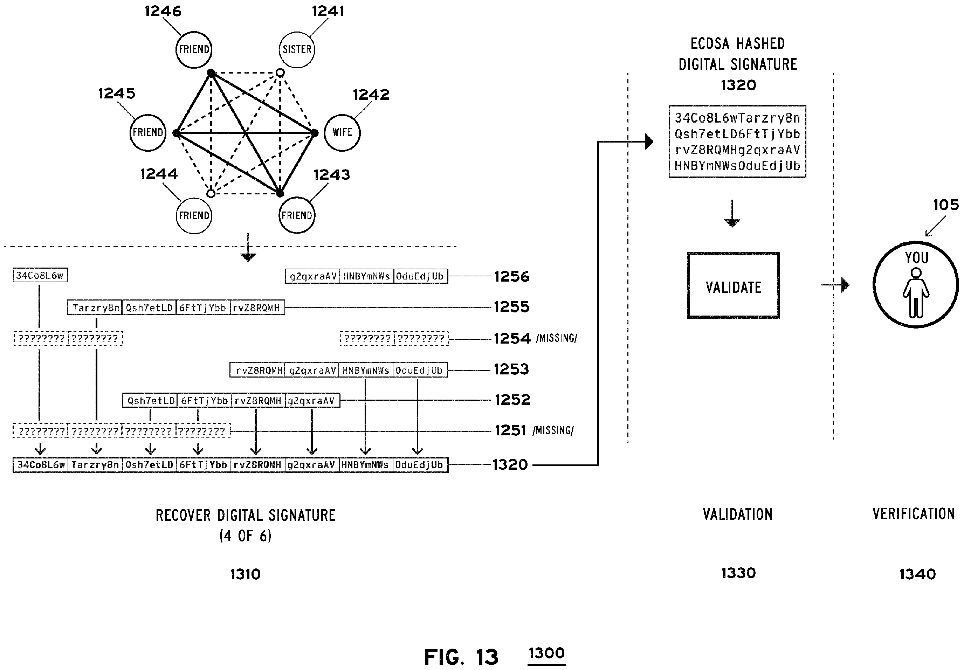

FIG. 13 is a diagram illustrating the process 1300 of using the host biometric digital signatures 1251-1256 from the people 1241-1246 of FIG. 12 to generate a reconstructed biometric digital signature 1320 for the user 105, in accordance with at least one embodiment of the present disclosure. In this figure, host biometric digital signatures 1252, 1253, 1255, 1256 from m (e.g., four (4)) number of then (e.g., six (6)) number of the people 1242, 1243, 1245, 1246 are used to reconstruct the biometric digital signature 1320 for the user 105. Then, the reconstructed biometric digital signature 1320 for the user 105 can then be validated 1330 for the user 105 to be verified 1340.

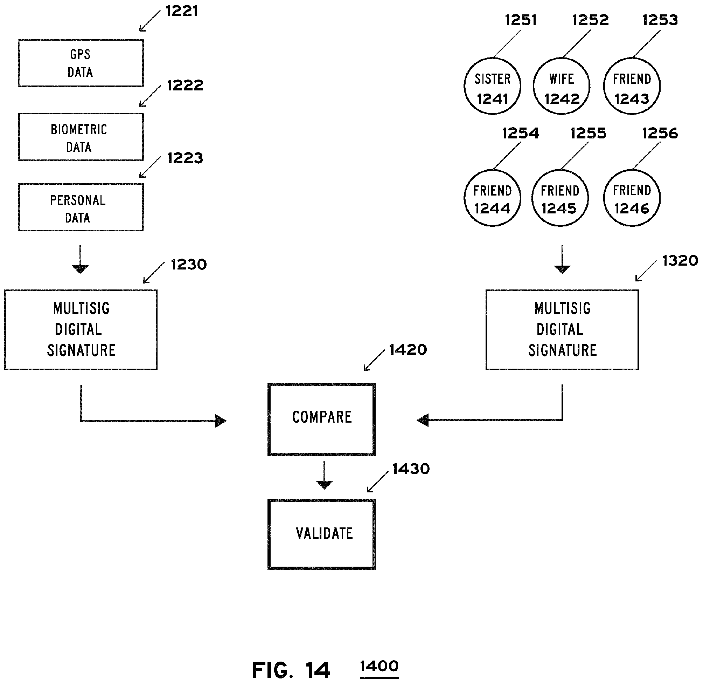

FIG. 14 is a diagram illustrating the process 1400 of verifying the user 105 by validating the reconstructed biometric digital signature 1320 for the user 105 of FIG. 13, in accordance with at least one embodiment of the present disclosure. In this figure, GPS data 1221, biometric data 1222, and/or personal data 1223 from the user 105 is hashed using a fuzzy hash algorithm (or alternatively a hash algorithm) to generate a biometric digital signature 1230 for the user 105. Host biometric digital signatures 1252, 1253, 1255, 1256 from m (e.g., four (4)) number of the n (e.g., six (6)) number of the people 1242, 1243, 1245, 1246 are used to reconstruct the biometric digital signature 1320 for the user 105. The reconstructed the biometric digital signature 1320 is compared 1420 to the biometric digital signature 1230 for the user 105. If the reconstructed the biometric digital signature 1320 for the user 105 is found to be identical to the biometric digital signature 1230 for the user 105, the reconstructed the biometric digital signature 1320 is validated 1430.

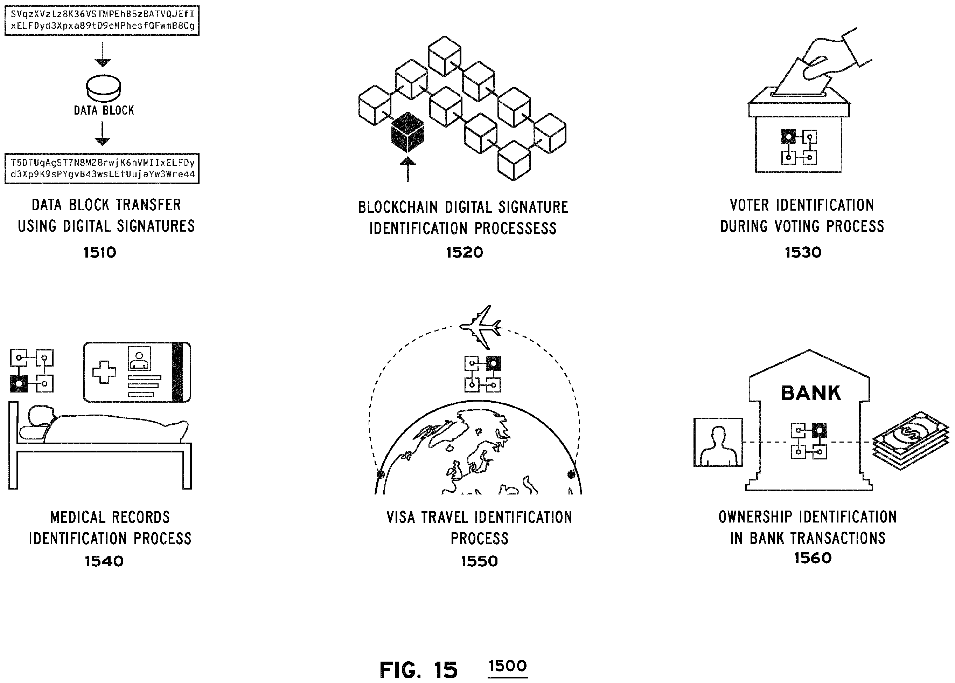

FIG. 15 is a diagram illustrating various different types of transactions that may occur after the user 105 is verified by validating the biometric digital signature for the user 105, in accordance with at least one embodiment of the present disclosure. As shown in this figure, the various different types of transactions that may occur include, but are not limited to, the transferring the assignment of data blocks on a blockchain using biometric digital signatures 1510, identification of assignment of data blocks on a blockchain using biometric digital signatures 1520, identification of a user 105 for casting a vote during a voting process 1530, identification of a user 105 for obtaining medical records 1540, identification of user 105 for obtaining travel documentation 1550, and identification of ownership of bank accounts for conducting bank transactions using biometric digital signatures 1560.

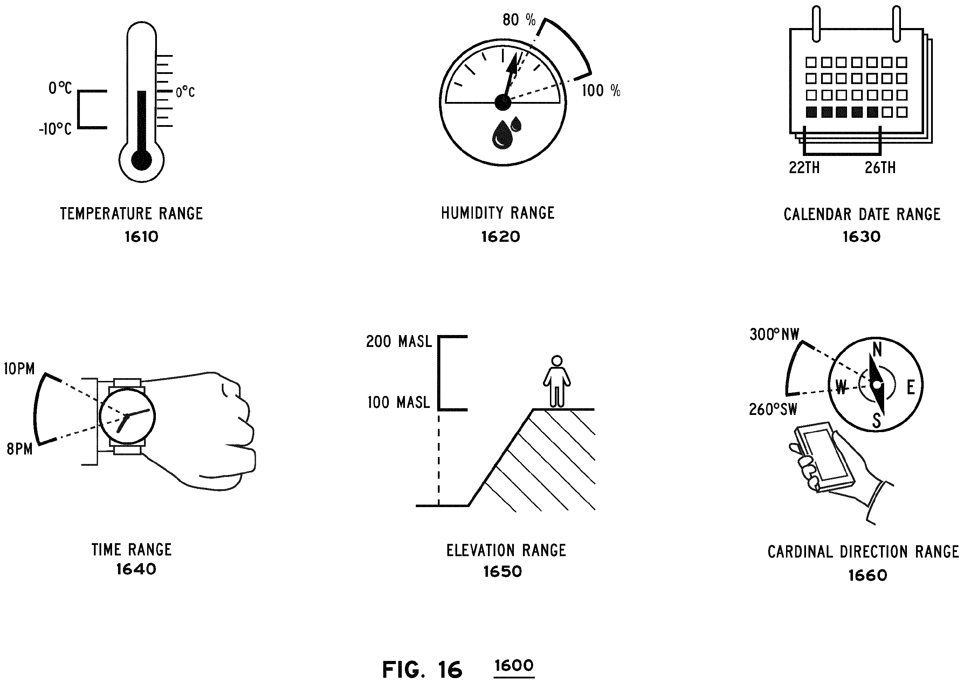

FIG. 16 is a diagram illustrating various different types of additional identifying information that may be hashed along with biometric data obtained from the user 105 to generate a biometric digital signature for the user 105, in accordance with at least one embodiment of the present disclosure. As shown in this figure, the various different types of additional identifying information that may be utilized include, but are not limited to, temperature of the environment 1610, humidity of the environment 1620, a calendar date range 1630, a time range 1640, an elevation range 1650, and a cardinal direction range 1660.

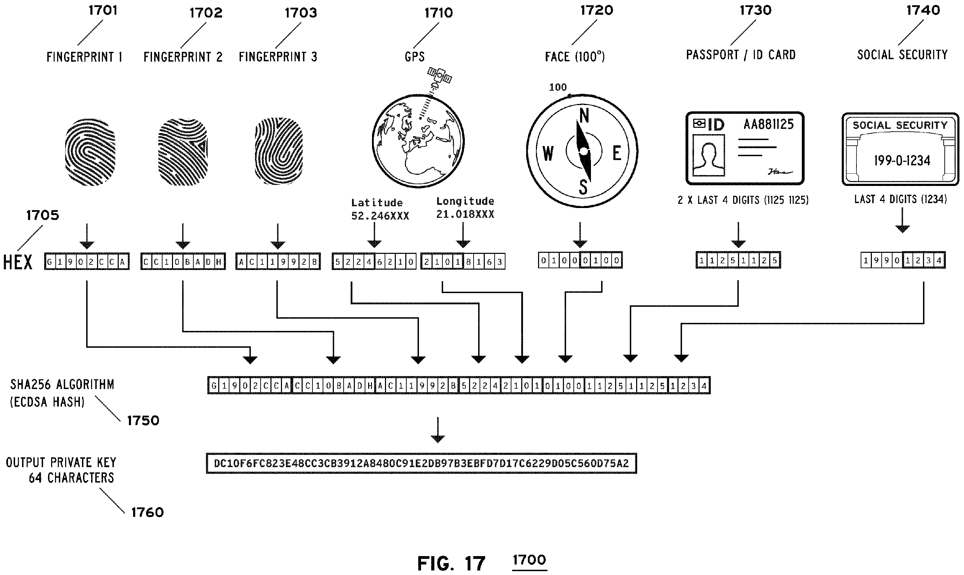

FIG. 17 is a diagram illustrating the process 1700 of generating a biometric digital signature 1760 for a user 105 by hashing biometric data 1701, 1702, 1703 from the user 105 along with additional identifying information 1710, 1720 and personal information 1730, 1740 for the user 105, in accordance with at least one embodiment of the present disclosure. In this figure, biometric information, in the form of fingerprints 1701, 1702, 1703, is obtained from the user 105. Biometric data (in the form of hexadecimal numbers 1705) is generated from the biometric information of the fingerprints 1701, 1702, 1703.

Also, additional identifying information is obtained for the user 105. The additional identifying information comprises GPS location information (e.g., latitude and longitude) 1710 and cardinal direction information 1720. Digital numbers (e.g., hexadecimal numbers 1705) are generated from the additional identifying information.

In addition, personal information is obtained from the user 105. The personal information comprises the birth date 1730 of the user 105 and the last four digits of the user's 105 social security number. Digital numbers (e.g., hexadecimal numbers 1705) are generated from the personal information.

The digital numbers 1750 (e.g., all of the hexadecimal numbers 1705) for the biometric information (e.g., fingerprints 1701, 1702, 1703), the additional identifying information (e.g., GPS location information 1710 and cardinal direction information 1720), and the personal information (e.g., birth date 1730 and last four digits of the social security number 1740) are hashed using a fuzzy hash algorithm (or alternatively a hash algorithm) to generate the biometric digital signature 1760 for the user 105.

FIGS. 18, 19, 20, 21, and 22 are diagrams that together show processes 1800, 1900, 2000, 2100, 2200 for generating and utilizing non-fungible tokens (NFTs) for discounts for purchases, in accordance with at least one embodiment of the present disclosure.

FIG. 18 is a diagram illustrating the process 1800 for generating a non-fungible token (NFT) 1860 for a product (e.g., a product NFT 1860), in accordance with at least one embodiment of the present disclosure. In FIG. 18, a user (e.g., user 1) 1810 is shown to be associated with a digital wallet 1820. In one or more embodiments, the digital wallet 1820 may be located on a computing device (e.g., user device 130 of FIG. 1A), which is associated with the user 1810. In some embodiments, the digital wallet 1820 may include a private key (e.g., in a digital data format, such as a binary number and/or hexadecimal number) associated with the user 1810. The private key may be a biometric digital signature (e.g., biometric digital signature 1760 of FIG. 17) for the user 1810. In one or more embodiments, the biometric digital signature may be generated as explained in the descriptions of FIGS. 1A to 17.

During operation of the process 1800, the user 1810 may visit a website (e.g., website 1) 1830, such as an online technology website, on the internet (e.g., internet 145 of FIG. 1A) by utilizing a computing device, such as user device 130 of FIG. 1A. When the user 1810 visits the website 1830 and views an article (e.g., webpage) on the website 1830 regarding a specific product (e.g., a specific new model of a vehicle) 2270 (refer to FIG. 22), a computing device (e.g., a server, such as node 140 of FIG. 1A) associated with the website 1830 may receive an indication that the user 1810 has visited the website 1830 and viewed the article (e.g., webpage) associated with the product 2270, and may generate a product NFT 1860 for the user 1810 for that particular product 2270. The product NFT 1860 indicates that the user 1810 viewed the article on the website 1830 about that specific product (e.g., the specific new model of the vehicle) 2270. In other embodiments, the product determination may result from the user visiting other electronic content, such as through a mobile application.

In one or more embodiments, the product NFT 1860 for the user 1810 for the particular product 2270 may be generated by hashing (e.g., utilizing a fuzzy hash algorithm or, alternatively, a hash algorithm) an article identification (ID) code 1840 (e.g., in a digital data format, such as a binary number and/or hexadecimal number) associated with the particular product (e.g., the specific new model of vehicle) 2270 together with a public key 1850 (e.g., in a digital data format, such as a binary number and/or hexadecimal number) associated with the user 1810. The public key 1850 associated with the user is associated with a private key associated with the user 1810.

In one or more embodiments, the digital wallet 1820 may include the public key 1850 (e.g., public wallet address) associated with the private key (e.g., private wallet address) of the user 1810. In some embodiments, the public key 1850 is generated by hashing (e.g., utilizing a fuzzy hash algorithm or, alternatively, a hash algorithm) the private key of the user 1810. In one or more embodiments, from the private key, a one-way cryptographic function (e.g., elliptic curve multiplication), which is irreversible, may be utilized to generate the public key. It should be noted that since a one-way cryptographic function is irreversible, determining the private key from the public key would require an exhaustive brute-force search of all possible private keys. Elliptic curve multiplication, which is one type of one-way cryptographic function, can be referred to as a "trap door" function because it is simple to perform in one direction (multiplication), but it is impossible to perform in the reverse direction (division). Thus, the public key can be easily created (calculated) from the private key, but the function cannot be reversed to create (calculate) the private key from the public key.

In one or more embodiments, the computing device (e.g., a server, such as node 140 of FIG. 1A) associated with the website 1830 may utilize an ECDSA to hash the article ID code 1840 together with the public key 1850 to generate a product NFT 1860 for the user 1810. In some embodiments, the computing device associated with the website 1830 may utilize a SHA-256 algorithm, a Merkle-Damgard algorithm, a MD5 algorithm, a SHA-1 algorithm, a SHA-2 algorithm, a RACE Integrity Primitives Evaluation Message Digest-160 (RIPEMD-160) algorithm, a Whirlpool algorithm, and/or a BLAKE2 algorithm to hash the article ID code 1840 together with the public key 1850 to generate the product NFT 1860 for the user 1810.

After the computing device associated with the website 1830 generates the product NFT 1860 for the user 1810 for the particular product 2270, the product NFT 1860 may be transmitted (e.g., via the internet, such as internet 145 of FIG. 1A, and/or any public and/or private network and/or communication system) to and stored onto the digital wallet 1820 of the user 1810.

FIG. 19 is a diagram illustrating the process 1900 for verifying that a user (e.g., user 1 1810) obtained a NFT for a product (e.g., product NFT 1860), in accordance with at least one embodiment of the present disclosure. In FIG. 19, during operation of the process 1900, a user (e.g., user 1 1810) may visit a website (e.g., website 1) 1830 on the internet (e.g., internet 145 of FIG. 1A) by utilizing a computing device, such as user device 130 of FIG. 1A. When the user (e.g., user 1 1810) visits the website 1830 and views an article on the website 1830 regarding a specific product (e.g., a specific new model of a vehicle) 2270, a computing device (e.g., a server, such as node 140 of FIG. 1A) associated with the website 1830 may store onto a database (e.g., website 1 database) 1910, which may be located on the computing device (e.g., a server, such as node 140 of FIG. 1A), the public key (e.g., in a digital data format, such as a binary number and/or hexadecimal number) 1850 associated with the private key for the user (e.g., user 1 1810). As such, the database (e.g., website 1 database) 1910 may include a listing of users (e.g., list of wallets 1950) that includes the public keys 1850, 1851, 1852 associated with the users 1810, 1811, 1812 that visited the website 1830 and viewed an article on the website 1830 regarding the specific product 2270.

Also, during operation of the process 1900, an advertiser, distributor, and/or manufacturer 1930 for the specific product 2270 on the website 1830 may desire to know which users (e.g., user 1 1810, user 2 1811, user 3 1812) visited the website 1830 and viewed the article on the website 1830 regarding the specific product 2270. As such, a computing device (e.g., a server, such as node 140 of FIG. 1A) associated with the advertiser, distributor, and/or manufacturer 1930 for the specific product 2270 may transmit (e.g., via the internet, such as internet 145 of FIG. 1A, and/or any public and/or private network and/or communication system) a request 1920 to the database (e.g., website 1 database) 1910, which is associated with the website 1830, requesting the listing of the users (e.g., list of wallets 1950) that visited the website 1830 and viewed the article on the website 1830 regarding the specific product 2270.

In response to receiving the request 1920 from the advertiser, distributor, and/or manufacturer 1930, the database (e.g., website 1 database) 1910 may transmit 1940 (e.g. via the internet, such as internet 145 of FIG. 1A, and/or any public and/or private network and/or communication system) to the computing device (e.g., a server, such as node 140 of FIG. 1A) associated with the advertiser, distributor, and/or manufacturer 1930 the listing of the users (e.g., list of wallets 1950) that visited the website 1830 and viewed the article on the website 1830 regarding the specific product 2270. It should be noted that a user (e.g., user 1 1810, user 2 1811, user 3 1812) included within the listing of the users (e.g., list of wallets 1950) indicates that the user visited the website 1830 and viewed the article on the website 1830 regarding the specific product 2270 and, as a result, obtained a product NFT (e.g., product NFT 1860) for the particular product 2270.

FIG. 20 is a diagram illustrating the process 2000 for sending to users NFTs for discounts for purchases (e.g., discount NFTs 2010, 2020, 2030), in accordance with at least one embodiment of the present disclosure. In FIG. 20, during the process 2000, the advertiser, distributor, and/or manufacturer 1930 for the specific product 2270 on the website 1830 may desire to send discount NFTs 2010, 2020, 2030, which provide discounts (e.g., a coupon for a percentage discount on a retail price of the specific product) for purchasing the specific product 2270, to the users (e.g., user 1 1810, user 2 1820, user 3 1830) that visited the website 1830 and viewed the article on the website 1830 regarding the specific product 2270 and, as a result, obtained a product NFT (e.g., product NFT 1860) for the particular product 2270. As such, the computing device (e.g., a server, such as node 140 of FIG. 1A) associated with the advertiser, distributor, and/or manufacturer 1930 may transmit (e.g., via the internet, such as internet 145 of FIG. 1A, and/or any public and/or private network and/or communication system) the discount NFTs 2010, 2020, 2030 to at least one of the users (e.g., user 1 1810, user 2, 1811, user 3 1812) that are included within the listing of the users (e.g., list of wallets 1950).

It should be noted that, in one or more embodiments, each of the discount NFTs 2010, 2020, 2030 may include the same and/or different discounts (e.g., percentage discounts off of the retail price, such as for some examples 15%, 20%, and/or 25% off of the retail price for the specific product) for the different users (e.g., user 1 1810, user 2, 1811, user 3 1812) that are included within the listing of the users (e.g., list of wallets) 1950. As such, for example, user 1 1810 and user 2 1811 may receive discount NFTs 2010, 2020 that provide a 15% discount off of the retail price for the specific product 2270, while user 3 1812 may receive a discount NFT 2030 that provides a 25% discount off of the retail price for the specific product 2270.

FIG. 21 is a diagram illustrating the process 2100 for generating an NFT for a discount for a purchase (e.g., discount NFT 2010), in accordance with at least one embodiment of the present disclosure. In FIG. 21, during the process 2100, when a user (e.g., user 1 1810) visits a website (e.g., website 1830) and views an article on the website (e.g., website 1830) regarding a specific product (e.g., a specific new model of a vehicle) 2270, a computing device (e.g., a server, such as node 140 of FIG. 1A) associated with the website (e.g., website 1830) may generate a product NFT 1860 for the user (e.g., user 1 1810) for that particular product 2270. The product NFT 1860 indicates that the user (e.g., user 1 1810) viewed the article on the website (e.g., website 1830) about that specific product (e.g., the specific new model of the vehicle) 2270.

The product NFT 1860 for the user (e.g., user 1 1810) for the particular product 2270 may be generated by hashing (e.g., utilizing a fuzzy hash algorithm or, alternatively, a hash algorithm) an article identification (ID) code 1840 (e.g., in a digital data format, such as a binary number and/or hexadecimal number) associated with the particular product (e.g., the specific new model of vehicle) 2270 together with a public key 1850 (e.g., in a digital data format, such as a binary number and/or hexadecimal number) associated with a private key for the user (e.g., user 1 1810).

Also during the process 2100, an advertiser, distributor, and/or manufacturer (e.g., advertiser, distributor, and/or manufacturer 1930) for the specific product 2270 on the website (e.g., website 1830) may desire to send a discount NFT (e.g., discount NFT 2010), which provides a discount (e.g., a coupon for a percentage discount on a retail price of the specific product) for purchasing the specific product 2270, to a user (e.g., user 1 1810) that visited the website (e.g., website 1830) and viewed the article on the website (e.g., website 1830) regarding the specific product 2270 and, as a result, obtained a product NFT (e.g., product NFT 1860) for the particular product 2270. As such, a computing device (e.g., a server, such as node 140 of FIG. 1A) associated with the advertiser, distributor, and/or manufacturer may generate the discount NFT 2010 for the user (e.g., user 1 1810) for that particular product 2270.

The discount NFT 2010 for the user (e.g., user 1 1810) for the particular product 2270 may be generated by hashing (e.g., utilizing a fuzzy hash algorithm or, alternatively, a hash algorithm) the product NFT 1860 (e.g., in a digital data format, such as a binary number and/or hexadecimal number) associated with the particular product (e.g., the specific new model of vehicle) 2270 together with an NFT Salt 2110 (e.g., in a digital data format, such as a binary number and/or hexadecimal number, which may be a random number) associated with the advertiser, distributor, and/or manufacturer (e.g., advertiser, distributor, and/or manufacturer 1930) for the specific product 2270. In one or more embodiments, the NFT Salt 2110 may be a number (e.g., a random number) associated with the product (e.g., a product specific number, such as an assigned identification (ID) number for the particular product). It should be noted that the NFT Salt 2110 may be random data (e.g., a random number) that is used as an additional input (e.g., a seed) to the product NFT 1860 for the hashing to generate the discount NFT 2010.

In one or more embodiments, the computing device (e.g., a server, such as node 140 of FIG. 1A) associated with the advertiser, distributor, and/or manufacturer (e.g., advertiser, distributor, and/or manufacturer 1930) may utilize an ECDSA to hash the product NFT 1860 together with the NFT Salt 2110. In some embodiments, the computing device associated with the advertiser, distributor, and/or manufacturer (e.g., advertiser, distributor, and/or manufacturer 1930) may utilize a SHA-256 algorithm, a Merkle-Damgard algorithm, a MD5 algorithm, a SHA-1 algorithm, a SHA-2 algorithm, a RACE Integrity Primitives Evaluation Message Digest-160 (RIPEMD-160) algorithm, a Whirlpool algorithm, and/or a BLAKE2 algorithm to hash the product NFT 1860 together with the NFT Salt 2110.

FIG. 22 is a diagram illustrating the process 2200 for utilizing an NFT for a discount for a purchase (e.g., discount NFT 2010), in accordance with at least one embodiment of the present disclosure. In FIG. 22, during operation of the process 2200, a user (e.g., user 1 1810) may desire to purchase a specific product (e.g., a specific new model of a vehicle) 2270 from an advertiser, distributor, and/or manufacturer 1930 for the specific product 2270. As such, the user (e.g., user 1 1810) may transmit (e.g., via the internet, such as internet 145 of FIG. 1A, and/or any public and/or private network connected to the public ledger and/or communication system), by utilizing a computing device (e.g., user device 130 of FIG. 1A), a purchase request 2210 to a product page 2220 for the specific product 2270 of a website associated with the advertiser, distributor, and/or manufacturer 1930. Also, during operation of the process 2200, the user (e.g., user 1 1810) may transmit (e.g., via the internet, such as internet 145 of FIG. 1A, and/or any public and/or private network connected to the public ledger and/or communication system), by utilizing a computing device (e.g., user device 130 of FIG. 1A), an NFT for a discount for the purchase (e.g., a discount NFT 2010) as well as a payment (e.g., a digital currency, such as a cryptocurrency) 2280 to a computing device (e.g., a server, such as node 140 of FIG. 1A), which is associated with the advertiser, distributor, and/or manufacturer 1930, for the purchase of the specific product (e.g., a specific new model of a vehicle) 2270.

After receiving the purchase request 2210 on the product page 2220, the advertiser, distributor, and/or manufacturer 1930 may desire to confirm whether the user (e.g., user 1 1810) did actually visit the website 1830 and view the article on the website 1830 regarding the specific product 2270 and, as such, received an NFT for a discount for the purchase (e.g., a discount NF 2010). The advertiser, distributor, and/or manufacturer 1930 can confirm whether the user (e.g., user 1 1810) did actually visit the website 1830 and view the article on the website 1830 regarding the specific product 2270 by checking a listing of users (e.g., list of wallets 1950) that includes the public keys 1850, 1851, 1852 associated with the users 1810, 1811, 1812 that visited the website 1830 and viewed the article on the website 1830 regarding the specific product 2270 and, as such, received NFTs for discounts for the purchase (e.g., discount NFT 2010) (e.g., by checking if a discount NFT 2010 for the user exists 2240). This listing of users (e.g., list of wallets 1950) may be located on a purchaser, distributor, and/or advertiser database 2230, which may be located on a computing device (e.g., a server, such as node 140 of FIG. 1A) associated with the website associated with the advertiser, distributor, and/or manufacturer 1930.

Then, after the advertiser, distributor, and/or manufacturer 1930 confirms 2250 that the user (e.g., user 1 1810) did actually visit the website 1830 and view the article on the website 1830 regarding the specific product 2270 and, as such, received an NFT for a discount for the purchase (e.g., a discount NF 2010), the advertiser, distributor, and/or manufacturer 1930 may proceed with the transaction for the purchase of the specific product 2270 by delivering the specific product 2270 with a discount 2260 to the user (e.g., user 1 1810).

FIGS. 23, 24, 25, 26, and 27 are diagrams that together show processes 2300, 2400, 2500, 2600, 2700 for smart contracts (e.g., which involves conditional transfers of currency), in accordance with at least one embodiment of the present disclosure. In one or more examples, smart contracts are self-executable code on a blockchain that may be controlled by a set of rules set up by a smart contract deployer (e.g., a user with a digital wallet that initiates the smart contract). For these smart contracts, initially, currency is moved into a smart contract vault at the formation of the smart contract. When a specified condition(s) in the smart contract has been met, the currency can be moved out of the smart contract vault to a designated destination. It should be noted that after the smart contract deployer has initiated the smart contract and the currency has been moved into the smart contract vault, the smart contract deployer is no longer able to access the currency. The currency will only be moved out of the smart contract vault after the specified condition(s) has been met.

FIG. 23 is a diagram illustrating a process 2300 for a smart contract, which involves a conditional transfer (e.g., a timed-lock transfer in terms of meeting a designated calendar date) of currency (e.g., a digital currency, such as a cryptocurrency), in accordance with at least one embodiment of the present disclosure. In FIG. 23, a user 2305 is shown to be associated with a digital wallet 2310. In one or more embodiments, the digital wallet 2310 may be located on a computing device (e.g., user device 130 of FIG. 1A), which is associated with the user 2305. The digital wallet 2310 may include a private key (e.g., in a digital data format, such as a binary number and/or hexadecimal number) associated with the user 2305. The private key may be a biometric digital signature (e.g., biometric digital signature 1760 of FIG. 17) for the user 2305. The biometric digital signature may be generated as explained in the descriptions of FIGS. 1A to 17.

During operation of the process 2300, the user 2305 may desire to send a specific amount of currency (e.g., a digital currency, such as a cryptocurrency) to a first recipient user 2375 with the condition that the first recipient user 2375 does not receive the currency until a specific calendar date. For example, on December 25, 2021, at 4 PM, the user 2305 may desire to send a specific amount of currency (e.g., a digital currency, such as a cryptocurrency) 2315 from its digital wallet 2310 to a digital wallet 2335 associated with the first recipient user 2375 with the condition that the first recipient user 2375 does not receive the currency until January 1, 2025, at 12 AM (e.g., the currency transfer is time locked 2320 until January 1, 2025, at 12 AM). As such, the user 2305 may transmit (e.g., via the internet, such as internet 145 of FIG. 1A, and/or any public and/or private network and/or communication system), by utilizing a computing device (e.g., user device 130 of FIG. 1A) associated with the digital wallet 2310 of the user 2305, conditional transfer instructions to a computing device (e.g., a server, such as node 140 of FIG. 1A), which is associated with an account for currency of the user 2305, specifying that a specific amount of currency (e.g., a digital currency, such as a cryptocurrency) 2315 is to be transferred from the digital wallet 2310 of the user 2305 to the digital wallet 2335 associated with the first recipient user 2375 with the condition that the first recipient user 2375 does not receive the currency until January 1, 2025, at 12 AM

Then, after time passes, the computing device (e.g., a server, such as node 140 of FIG. 1A), which is associated with an account for currency of the user 2305, determines whether the time and date are January 1, 2025, at 12 AM, and whether it is possible for the specific amount of currency to be transferred to the digital wallet 2335 associated with the first recipient user 2375. If the computing device (e.g., a server, such as node 140 of FIG. 1A), which is associated with an account for currency of the user 2305, determines that the time and date are January 1, 2025, at 12 AM (e.g., the currency transfer is time unlocked 2325), and that it is possible for the specific amount of currency to be transferred to the digital wallet 2335 associated with the first recipient user 2375, the computing device (e.g., a server, such as node 140 of FIG. 1A), which is associated with an account for currency of the user 2305, may transfer (e.g., via the internet, such as internet 145 of FIG. 1A, and/or any public and/or private network and/or communication system) the specific amount of currency (e.g., a digital currency, such as a cryptocurrency) 2330 to the digital wallet 2335 associated with the first recipient user 2375.

However, if the computing device (e.g., a server, such as node 140 of FIG. 1A), which is associated with an account for currency of the user 2305, determines that the time and date are January 1, 2025, at 12 AM (e.g., the currency transfer is time unlocked 2325), but that it is not possible for the specific amount of currency to be transferred to the digital wallet 2335 associated with the first recipient user 2375 and, thus, there is no access to the currency 2340, an additional set of conditions 2350 may apply for the transfer of the specific amount of currency (e.g., a digital currency, such as a cryptocurrency) 2330 to a digital wallet 2370 associated with a second recipient user 2385. It should be noted that the user 2305 may specify the second recipient user 2385. Also, the user 2305 may specify this additional set of conditions 2350 and/or this additional set conditions 2350 may be predetermined and set as a default. Various different types of conditions may be employed for the conditions 2350 of the process 2300 including, but not limited to, a specific time in terms of a calendar date 2351, a specific time in terms of a number of mined blocks 2352, a number of block confirmations (e.g., refer to 2753 of FIG. 27), a currency (e.g., bitcoin) price (e.g., refer to 2754 of FIG. 27), and a specific age of a user (e.g., refer to 2755 of FIG. 27). For the example of FIG. 23, the additional set of conditions 2350 may include the passing of a specific amount of time (e.g., the passing of thirty (30) days) that may be verified by (1) a calendar date 2351 and/or by (2) a number of mined blocks 2352.

After some time passes, if the computing device (e.g., a server, such as node 140 of FIG. 1A), which is associated with an account for currency of the user 2305, determines that the specific amount of time of the additional set of conditions 2350 has not yet passed (e.g., 30 days has not yet passed) and, thus, the conditions are not met 2355, the computing device (e.g., a server, such as node 140 of FIG. 1A), which is associated with an account for currency of the user 2305, will not transfer the specific amount of currency (e.g., a digital currency, such as a cryptocurrency) to the digital wallet 2370 associated with the second recipient user 2385.

However, after some time passes, if the computing device (e.g., a server, such as node 140 of FIG. 1A), which is associated with an account for currency of the user 2305, determines that the specific amount of time of the additional set of conditions 2350 has passed (e.g., 30 days has passed) and, thus, the conditions are met 2360, the computing device (e.g., a server, such as node 140 of FIG. 1A), which is associated with an account for currency of the user 2305, may transfer (e.g., via the internet, such as internet 145 of FIG. 1A, and/or any public and/or private network and/or communication system) the specific amount of currency (e.g., a digital currency, such as a cryptocurrency) 2365 to the digital wallet 2370 associated with the second recipient user 2385.

FIG. 24 is a diagram illustrating a process 2400 for a smart contract, which involves a conditional transfer (e.g., a timed-lock transfer in terms of passage of a designated number of days) of currency (e.g., a digital currency), in accordance with at least one embodiment of the present disclosure. In FIG. 24, a digital wallet 2410 is associated with a user (not shown). In one or more embodiments, the digital wallet 2410 may be located on a computing device (e.g., user device 130 of FIG. 1A), which is associated with the user. The digital wallet 2410 may include a private key (e.g., in a digital data format, such as a binary number and/or hexadecimal number) associated with the user. The private key may be a biometric digital signature (e.g., biometric digital signature 1760 of FIG. 17) for the user. The biometric digital signature may be generated as explained in the descriptions of FIGS. 1A to 17.

During operation of the process 2400 of FIG. 24, the user may desire to send a specific amount of currency (e.g., a digital currency, such as a cryptocurrency) to a destination digital wallet 2440 of a first recipient user (not shown) with the condition that the first recipient user does not receive the currency until a specific amount of time has passed (e.g., 3650 days have passed). For example, on day zero (0), the user may desire to send a specific amount of currency (e.g., a digital currency, such as a cryptocurrency) 2415 from its digital wallet 2410 to the destination digital wallet 2440 associated with the first recipient user with the condition that the destination digital wallet 2440 does not receive the currency until 3650 days have passed (e.g., the currency transfer is time locked 2420 until the passage of 3650 days). As such, the user may transmit (e.g., via the internet, such as internet 145 of FIG. 1A, and/or any public and/or private network and/or communication system), by utilizing a computing device (e.g., user device 130 of FIG. 1A) associated with the digital wallet 2410 of the user, conditional transfer instructions to a computing device (e.g., a server, such as node 140 of FIG. 1A), which is associated with an account for currency of the user, specifying that a specific amount of currency (e.g., a digital currency, such as a cryptocurrency) 2415 is to be transferred from the digital wallet 2410 of the user to the destination digital wallet 2440 associated with the first recipient user with the condition that the destination digital wallet 2440 does not receive the currency until 3650 days have passed.

Then, after time passes, the computing device (e.g., a server, such as node 140 of FIG. 1A), which is associated with an account for currency of the user, determines whether the amount of time has passed (e.g., 3650 days have passed), and whether it is possible for the specific amount of currency to be transferred to the destination digital wallet 2440 associated with the first recipient user. If the computing device (e.g., a server, such as node 140 of FIG. 1A), which is associated with an account for currency of the user, determines that 3650 days have passed (e.g., the currency transfer is time unlocked 2425), and that it is possible for the specific amount of currency to be transferred to the destination digital wallet 2440 associated with the first recipient user, the computing device (e.g., a server, such as node 140 of FIG. 1A), which is associated with an account for currency of the user, may transfer (e.g., via the internet, such as internet 145 of FIG. 1A, and/or any public and/or private network and/or communication system) the specific amount of currency (e.g., a digital currency, such as a cryptocurrency) 2430 to the destination digital wallet 2440 associated with the first recipient user.

However, if the computing device (e.g., a server, such as node 140 of FIG. 1A), which is associated with an account for currency of the user, determines that 3650 days have passed (e.g., the currency transfer is time unlocked 2425), but that it is not possible for the specific amount of currency to be transferred to the destination digital wallet 2440 associated with the first recipient user and, thus, there is no access to the currency 2445, an additional set of conditions 2450 may apply for the transfer of the specific amount of currency (e.g., a digital currency, such as a cryptocurrency) 2466 to a backup digital wallet 2470 associated with a second recipient user. It should be noted that the user may specify the second recipient user. Also, the user may specify the additional set of conditions 2450 and/or this additional set conditions 2450 may be predetermined and set as a default. Various different types of conditions may be employed for the conditions 2450 of the process 2400 including, but not limited to, a specific time in terms of a calendar date 2351, a specific time in terms of a number of mined blocks 2352, a number of block confirmations (e.g., refer to 2753 of FIG. 27), a currency (e.g., bitcoin) price (e.g., refer to 2754 of FIG. 27), and a specific age of a user (e.g., refer to 2755 of FIG. 27).

If the computing device (e.g., a server, such as node 140 of FIG. 1A), which is associated with an account for currency of the user, determines that the conditions of the additional set of conditions 2450 have not been met 2455, the computing device (e.g., a server, such as node 140 of FIG. 1A), which is associated with an account for currency of the user, will not transfer the specific amount of currency (e.g., a digital currency, such as a cryptocurrency) to the backup digital wallet 2470 associated with the second recipient user.

However, if the computing device (e.g., a server, such as node 140 of FIG. 1A), which is associated with an account for currency of the user, determines that the conditions have been met 2460, the computing device (e.g., a server, such as node 140 of FIG. 1A), which is associated with an account for currency of the user, may transfer (e.g., via the internet, such as internet 145 of FIG. 1A, and/or any public and/or private network and/or communication system) the specific amount of currency (e.g., a digital currency, such as a cryptocurrency) 2465 to the backup digital wallet 2470 associated with the second recipient user.

FIG. 25 is a diagram illustrating a process 2500 for a smart contract, which involves confirming that a condition (e.g., meeting a designated calendar date 2530) for a conditional transfer of currency (e.g., a digital currency) has been met, in accordance with at least one embodiment of the present disclosure. In FIG. 25, during operation of the process 2500, a user has conditionally locked 2510 a transfer of currency (e.g., a digital currency, such as a cryptocurrency) from its digital wallet to a destination digital wallet such that the transfer of the currency to the destination digital wallet will be unlocked to occur on a specific calendar date 2520.

A computing device (e.g., a server, such as node 140 of FIG. 1A), which is associated with an account for currency of the user, may determine whether the specific calendar date 2520 has occurred. If the computing device (e.g., a server, such as node 140 of FIG. 1A), which is associated with an account for currency of the user, determines that the specific calendar date 2520 has occurred, the computing device may confirm that the specific calendar date 2520 has occurred by confirming the number of mined blocks of the public ledger in a blockchain. It should be noted that each block in the blockchain takes a certain amount of time (e.g., 10 minutes) to be mined. As such, the number of mined blocks of the public ledger in a blockchain indicates a specific passage of time. The computing device may confirm that the specific calendar date 2520 has occurred by counting the number of mined blocks of the public ledger in the blockchain (e.g., starting with the starting block number 2530 in the blockchain and ending with the last block number in the blockchain), and calculating the passage of time according to the number of mined blocks in the blockchain.

If the computing device (e.g., a server, such as node 140 of FIG. 1A), which is associated with an account for currency of the user, determines that time required to mine the number of mined blocks of the public ledger in the specific blockchain is equal to the passage of time to meet the specific calendar date, the computing device can determine that the conditions have been met 2550. After the computing device (e.g., a server, such as node 140 of FIG. 1A), which is associated with an account for currency of the user, determines that the conditions have been met 2550, the transfer of currency (e.g., a digital currency, such as a cryptocurrency) from the digital wallet of the user to a destination digital wallet can be unlocked 2560 to occur.

FIG. 26 is a diagram illustrating a process 2600 for a smart contract, which involves a conditional transfer (e.g., a conditional transfer in terms of a plurality of specified conditions) of currency (e.g., a digital currency) 2655, in accordance with at least one embodiment of the present disclosure. As previously mentioned, smart contracts are self-executable code on a blockchain that may be controlled by a set of rules (e.g., specified conditions for currency transfer, which is in the code) set up by a smart contract deployer (e.g., user 2610 with a digital wallet 2620 that initiates the smart contract).

In one or more embodiments, a smart contract may be in the form of code that may run (e.g., that is capable to be run) on a blockchain (e.g., Ethereum blockchain). In particular, a smart contract may be a collection of code (comprising functions) and data (e.g., comprising states) that resides at a specific address on the blockchain (e.g., Ethereum blockchain). In some embodiments, smart contracts are a type of blockchain account (e.g., Ethereum account), which means that they can maintain a currency balance, and can send transactions over the network. Smart contracts are not controlled by a user, but instead are deployed onto the network and operate as programmed by the code. User accounts on the blockchain can interact with a smart contract by submitting transactions that execute a function defined by the smart contract. Smart contracts can have defined rules, similar to regular contracts, and can automatically enforce the defined rules via the code. Smart contracts cannot be deleted by default, and interactions with them are irreversible.

For example, for these smart contracts, initially, a smart contract deployer (e.g., user 2610 with a digital wallet 2620 that initiates the smart contract) may set up a smart contract by specifying a set of rules (e.g., specified conditions for currency transfer, which is in the code of the smart contract) that controls the smart contract. At the formation of the smart contract, a currency (e.g., digital currency 2655) is moved into a smart contract vault (e.g., smart contract vault 2630), which is a digital vault. When a specified condition(s) in the smart contract (e.g., which is specified in the code) has been met, the currency can be moved out of the smart contract vault to a designated destination. It should be noted that after the smart contract deployer (e.g., user 2610) has initiated the smart contract and the currency (e.g., digital currency 2655) has been moved into the smart contract vault (e.g., smart contract vault 2630), the smart contract deployer is no longer able to access the currency. The currency will only be moved out of the smart contract vault after the specified condition(s) has been met.

In one or more embodiments, in FIG. 26, a digital wallet (e.g., original wallet) 2620 is associated with a user 2610. In some embodiments, the digital wallet 2620 may be located on a computing device (e.g., user device 130 of FIG. 1A), which is associated with the user 2610. The digital wallet 2620 may include one or more private keys (e.g., in a digital data format, such as a binary number and/or hexadecimal number) associated with the user 2610. The private key(s) may be a biometric digital signature (e.g., biometric digital signature 1760 of FIG. 17) for the user 2610. The biometric digital signature may be generated as explained in the descriptions of FIGS. 1A to 17. The digital wallet 2620 may also include one or more public keys, where each public key may be associated with one of the private keys of the digital wallet 2620 (e.g., each private key is paired with a respective public key).

During operation of the process 2600 of FIG. 26, the user 2610 may desire to send a specific amount of currency (e.g., a digital currency, such as a cryptocurrency) 2655 from its digital wallet 2620 to a destination digital wallet 2680 of a first recipient user 2685, when a listing of specific conditions 2645 (e.g., where the listing of conditions can contain one or more conditions) has been met. The user 2610 may use the digital wallet 2620 to create a smart contract, where the smart contract may deposit the specific amount of currency 2655 into a smart contract vault 2630, and the user 2610 may specify in the smart contract that a specific amount of currency 2655 be transferred from the smart contract vault 2630 to the destination digital wallet 2680 of the first recipient user 2680, after all of the conditions 2645 in the listing of conditions 2645 have been met. In addition, the user 2610 may specify, in the smart contract, that if the listing of conditions 2645 has not been met by a specific passage of time (e.g., a passage of 360 days), the smart contract will self-destruct, and the currency 2655 in the smart contract vault 2630 can be transferred to a backup digital wallet 2670 of second recipient user (not shown) or, alternatively, can be transferred back to the digital wallet 2620 of the user 2610.

In one or more embodiments, the smart contract may involve the following parameters: an amount of currency, a destination wallet, a condition(s) to be met for the transfer of the currency to the destination wallet, a backup wallet (e.g., which may be the original digital wallet of the user sending the currency), and a condition(s) (e.g., passage of time) to be met for the transfer of the currency to the backup wallet. In one or more embodiments, the digital wallet 2620 of the user 2610 may be a programmable digital wallet capable of generating smart contracts, which execute transactions (e.g., transfers of currency) based on their inherited and/or programmed conditions. For these smart contracts, in one or more embodiments, when the conditions are not met, the smart contracts can self-destruct, and the currency can be transferred back to the original digital wallet or transferred to a backup digital wallet (e.g., depending upon which destination is specified in the smart contract).

In one or more embodiments, various different conditions may be employed for the specific conditions 2645 in the listing including, but not limited to, a specific time in terms of a calendar date, a specific time in terms of a number of mined blocks (e.g., time is calculated by the number of blocks mined by using a specific amount of time that is required to mine each block, such as ten minutes per block), a number of block confirmations (e.g., a number of confirmed mined blocks), a currency (e.g., bitcoin) price (e.g., a specific price of a specific currency achieved on a currency exchange), and a specific age of a user (e.g., a specific age met by a specific person).

In one or more embodiments, the smart contract vault 2630 is a piece of code that is deployed on the blockchain. Similar to an address with a private/public key, the smart contract vault 2630 (e.g., code) can hold currency (e.g., digital currency 2655). The code, of the smart contract vault 2630, has conditional parameters (e.g., rules), which may be related to who (e.g., user 2610) owns the currency, the conditions for moving the currency out of the smart contract vault 2630, who can receive the currency, and/or who can destroy the smart contract. The code governs the operation of the smart contract vault 2630.

Also, during operation of the process 2600 of FIG. 26, after the user 2610 has created the smart contract in its digital wallet 2620, the currency 2655 may be transferred from the digital wallet 2620 to the smart contract vault 2630. Then, after all of the conditions 2645 in the listing of conditions 2645 for transfer have been met 2640, the currency 2655 may be moved 2650 to the specified destination wallet 2680 of the first recipient user 2685.

However, if not all of the conditions 2645 of the listing of conditions 2645 have not be met by a specified passage of time (e.g., 360 days) 2660, the smart contract can self-destruct, and the currency 2655 can be transferred to the specified backup wallet 2670 of the second recipient user. Alternatively, if not all of the conditions 2645 of the listing of conditions 2645 have not be met by a specified passage of time (e.g., 360 days) 2660, the smart contract can self-destruct, and the currency 2655 can be transferred back to the original digital wallet 2620 of the user 2610 sending the currency 2655.

FIG. 27 is a diagram 2700 illustrating various different types of conditions 2751, 2752, 2753, 2754, 2755 that may be employed for the processes for smart contracts, which involve conditional transfers of currency, in accordance with at least one embodiment of the present disclosure. In FIG. 27, a user (not shown) is associated with a digital wallet 2710. The digital wallet 2710 may be located on a computing device (e.g., user device 130 of FIG. 1A), which is associated with the user. The digital wallet 2710 may include a private key (e.g., in a digital data format, such as a binary number and/or hexadecimal number) associated with the user. The private key may be a biometric digital signature (e.g., biometric digital signature 1760 of FIG. 17) for the user. The biometric digital signature may be generated as explained in the descriptions of FIGS. 1A to 17.

During operation of at least one of the disclosed process(es), the user may desire to send a specific amount of currency (e.g., a digital currency, such as a cryptocurrency) to a destination digital wallet 2735 associated with a first recipient user (not shown) with the condition that the first recipient user does not receive the currency until at least one condition has been met. Various different types of conditions may be employed including, but not limited to, a specific time in terms of a calendar date 2751, a specific time in terms of a number of mined blocks 2752 on a blockchain (e.g., time is calculated by the number of blocks mined by using a specific amount of time that is required to mine each block, such as ten minutes per block), a number of block confirmations 2753 on a blockchain (e.g., a number of confirmed mined blocks), a currency (e.g., bitcoin) price 2754 (e.g., a specific price of a specific currency achieved on a currency exchange), and a specific age of a user 2755 (e.g., a specific age met by a specific person).

Then, after time passes, a computing device (e.g., a server, such as node 140 of FIG. 1A), which is associated with an account for currency of the user, determines whether the condition(s) has been met, and whether it is possible for the specific amount of currency to be transferred to the destination digital wallet 2735 associated with the first recipient user. If the computing device (e.g., a server, such as node 140 of FIG. 1A), which is associated with an account for currency of the user, determines that the conditions have been met 2760 and that it is possible for the specific amount of currency to be transferred to the destination digital wallet 2735 associated with the first recipient user, the computing device (e.g., a server, such as node 140 of FIG. 1A), which is associated with an account for currency of the user, may transfer (e.g., via the internet, such as internet 145 of FIG. 1 A, and/or any public and/or private network and/or communication system) the specific amount of currency (e.g., a digital currency, such as a cryptocurrency) to the digital wallet 2735 associated with the first recipient user.

FIGS. 28 to 34 are diagrams that together show processes 2800, 2900, 3000, 3100, 3200, 3300, and 3400 for secure communications (e.g., textual, voice over Internet Protocol (VOIP), and images), which may be communications messages (e.g., textual messages, voice communication messages, and images), in accordance with at least one embodiment of the present disclosure.

FIG. 28 is a diagram illustrating a process 2800 for generating an NFT for secure communications (e.g., voice and/or textual messaging), in accordance with at least one embodiment of the present disclosure. In FIG. 28, a user 2810 is associated with a digital wallet 2820. The digital wallet 2820 may be located on a computing device (e.g., smart phone 2830), which is associated with the user 2810. The digital wallet 2820 may include a private key 2825 (e.g., in a digital data format, such as a binary number and/or hexadecimal number) associated with the user 2810. In one or more embodiments, the private key 2825 may be a biometric digital signature (e.g., biometric digital signature 1760 of FIG. 17) for the user 2810. The biometric digital signature may be generated as explained in the descriptions of FIGS. 1A to 17.

During operation of the process 2800, the user 2810 may desire to securely communicate (e.g., voice, such as shown in FIG. 32, and/or textual messaging, such as shown in FIG. 31) with another user (e.g., user 3250 in FIG. 32 and/or user 3181 in FIG. 31). The user 2810 may generate an NFT (e.g., GPS token) 2870 to be utilized for secure communications.

For generation of the NFT 2870, at least one processor (e.g., located on a computing device, such as smart phone 2830, of the user 2810) may hash (e.g., utilizing a fuzzy hash algorithm or, alternatively, a hash algorithm) biometric data (e.g., fingerprint data) 2850 from the user 2810 (e.g., which may be obtained via a computing device, such as the smart phone 2830, associated with the user 2810), geolocation data (e.g., GPS data) 2840 associated with a location of the user 2810 (e.g., which may be obtained via a computing device, such as the smart phone 2830, associated with the user 2810), and the private key 2825 together to generate a hash code 2860. The generated hash code 2860 may be employed for the NFT 2870. The NFT 2870 (e.g., hash code 2860) may be stored on the user's 2810 digital wallet 2820 to be utilized at a later time for secure communications (e.g., voice or textual messaging) with other users.

FIG. 29 is a diagram illustrating a process 2900 for utilizing a combination of geolocation data (e.g., GPS data) and biometric data (e.g., fingerprint data) for secure communications (e.g., textual messaging, such as a textual message 2912), in accordance with at least one embodiment of the present disclosure. In FIG. 29, a sender 2910 and a receiver 2920 are shown. Also, the sender 2910 and the receiver 2920 each have a respective associated computing device, which is in the form of a smart phone 2915, 2925.

The smart phone 2915 associated with the sender 2910 may contain a private key (e.g., in a digital data format, such as a binary number and/or hexadecimal number) associated with the sender 2910. In one or more embodiments, the private key may be a biometric digital signature (e.g., biometric digital signature 1760 of FIG. 17) for the sender 2910. The biometric digital signature may be generated as explained in the descriptions of FIGS. 1A to 17. The private key for the sender 2910 can have an associated public key 2911 for the sender 2910. The public key 2911 may be stored on the smart phone 2915.

The smart phone 2925 associated with the receiver 2920 may contain a private key (e.g., in a digital data format, such as a binary number and/or hexadecimal number) associated with the receiver 2920. In one or more embodiments, the private key may be a biometric digital signature (e.g., biometric digital signature 1760 of FIG. 17) for the receiver 2920. The biometric digital signature may be generated as explained in the descriptions of FIGS. 1A to 17. The private key for the receiver 2920 can have an associated public key 2930 for the receiver 2920. The public key 2930 may be stored on the smart phone 2925.

During operation of the process 2900, the sender 2910 may desire to securely send a textual message (e.g., in the form of a data packet(s)) 2912 to the receiver 2920. For sending a secure textual message 2912, at least one processor (e.g., located on a computing device, such as the smart phone 2915, associated with the sender 2910) may hash (e.g., utilizing a fuzzy hash algorithm or, alternatively, a hash algorithm) the textual message 2912, biometric data (e.g., fingerprint data) 2950 from the sender 2910 (e.g., which may be obtained via a computing device, such as the smart phone 2915, associated with the sender 2910) and/or geolocation data (e.g., GPS data) 2940 associated with a location of the sender 2910 (e.g., which may be obtained via a computing device, such as the smart phone 2915, associated with the sender 2910), the public key 2911 of the sender 2910, and the public key 2930 of the receiver 2920 together to generate a hash code 2960. The hash code 2960 is the encrypted textual message 2913.

Then, a computing device (e.g., the smart phone 2915) associated with the sender 2910 may transmit the encrypted textual message 2913 to a computing device (e.g., the smart phone 2925) associated with the receiver 2920. The computing device (e.g., the smart phone 2925) associated with the receiver 2920 may generate a private key from geolocation data (e.g., GPS data) 2970 associated with the receiver 2920 and/or biometric data (e.g., fingerprint data) 2980 associated with the receiver 2920. After the computing device (e.g., the smart phone 2925) associated with the receiver 2920 receives the encrypted textual message 2913 and generates the private key based on the geolocation data 2970 and/or biometric data 2980, the computing device (e.g., the smart phone 2925) associated with the receiver 2920 may decrypt 2990 the hash code 2960 of the encrypted textual message 2913 by de-hashing the hash code 2960 and the private key (e.g., which was generated using the geolocation data 2970 and/or biometric data 2980 associated with the receiver 2920) to obtain the unencrypted textual message 2912.

FIG. 30 is a diagram illustrating a process 3000 for utilizing a combination of geolocation data (e.g., GPS data) and biometric data (e.g., fingerprint data) for secure communications (e.g., VOIP), in accordance with at least one embodiment of the present disclosure. In FIG. 30, a first caller (e.g., caller 1) 3010 and a second caller (e.g., caller 2) 3020 are shown. In addition, the first caller 3010 and the second caller 3020 each have a respective associated computing device, which is in the form of a smart phone 3015, 3025.

The smart phone 3015 associated with the first caller 3010 may contain a private key (e.g., in a digital data format, such as a binary number and/or hexadecimal number) associated with the first caller 3010. In one or more embodiments, the private key may be a biometric digital signature (e.g., biometric digital signature 1760 of FIG. 17) for the first caller 3010. The biometric digital signature may be generated as explained in the descriptions of FIGS. 1A to 17. The private key for the first caller 3010 can have an associated public key 3011 for the first caller 3010. The public key 3011 may be stored on the smart phone 3015.

The smart phone 3025 associated with the second caller 3020 may contain a private key (e.g., in a digital data format, such as a binary number and/or hexadecimal number) associated with the second caller 3020. In one or more embodiments, the private key may be a biometric digital signature (e.g., biometric digital signature 1760 of FIG. 17) for the second caller 3020. The biometric digital signature may be generated as explained in the descriptions of FIGS. 1A to 17. The private key for the second caller 3020 can have an associated public key 3030 for the second caller 3020. The public key 3030 may be stored on the smart phone 3025.

During operation of the process 3000, the first caller 3010 may desire to have a secure voice call with (e.g., send voice communications 3012, such as in the form of a data packet(s), to) the second caller 3020. For sending voice communications 3012 by the first caller 3010 to the second caller 3020, at least one processor (e.g., located on a computing device, such as the smart phone 3015, associated with the first caller 3010) may hash (e.g., utilizing a fuzzy hash algorithm or, alternatively, a hash algorithm) the voice communications (e.g., data packet) 3012, biometric data (e.g., fingerprint data) 3050 from the first caller 3010 (e.g., which may be obtained via a computing device, such as the smart phone 3015, associated with the first caller 3010) and/or geolocation data (e.g., GPS data) 3040 associated with a location of the first caller 3010 (e.g., which may be obtained via a computing device, such as the smart phone 3015, associated with the first caller 3010), the public key 3011 of the first caller 3010, and the public key 3030 of the second caller 3020 together to generate a hash code 3060. The hash code 3060 is the encrypted voice communications (e.g., the voice communications 3012) 3090.

Then, a computing device (e.g., the smart phone 3015) associated with the first caller 1010 may transmit the encrypted voice communications 3090 to a computing device (e.g., the smart phone 3025) associated with the second caller 3020. The computing device (e.g., the smart phone 3025) associated with the second caller 2920 may generate a private key from geolocation data (e.g., GPS data) 3070 associated with the second caller 3020 and/or biometric data (e.g., fingerprint data) 3080 associated with the second caller 3020. After the computing device (e.g., the smart phone 3025) associated with the second caller 3020 receives the encrypted voice communications 3090 and generates the private key based on the geolocation data 3070 and/or biometric data 3080, the computing device (e.g., the smart phone 3025) associated with the second caller 3020 may decrypt 3095 the hash code 3060 of the encrypted voice communications 3090 by de-hashing the hash code 3060 and the private key (e.g., which was generated using the geolocation data 3070 and/or biometric data 3080 associated with the second caller 3020) to obtain the unencrypted voice communications 3012.

FIG. 31 is a diagram illustrating a process 3100 for utilizing NFTs (e.g., NFT 3150) for secure communications (e.g., textual messaging, such as textual message 3112), in accordance with at least one embodiment of the present disclosure. In FIG. 31, a sender 3110 and a receiver 3120 are shown. Also, the sender 3110 and the receiver 3120 each have a respective associated computing device, which is in the form of a smart phone 3115, 3125.

The smart phone 3115 associated with the sender 3110 may contain a digital wallet 3170, which may include an NFT 3150 associated with the receiver 3120 for secure communications with the receiver 3120 and a public key 3140 associated with the receiver 3120. The NFT 3150 may be generated as explained in the description of FIG. 28. The digital wallet 3170 may also include a private key (e.g., in a digital data format, such as a binary number and/or hexadecimal number) associated with the sender 3110. In one or more embodiments, the private key may be a biometric digital signature (e.g., biometric digital signature 1760 of FIG. 17) for the sender 3110. The biometric digital signature may be generated as explained in the descriptions of FIGS. 1A to 17. The private key for the sender 3110 can have an associated public key for the sender 3110. The public key may be stored in the digital wallet 3170 on the smart phone 3115 associated with the sender 3110.

The smart phone 3125 associated with the receiver 3120 may contain a digital wallet 3180, which may include the NFT 3150 associated with the receiver 3120 for secure communications. The digital wallet 3180 may also include a private key 3160 (e.g., in a digital data format, such as a binary number and/or hexadecimal number) associated with the receiver 3120. In one or more embodiments, the private key 3160 may be a biometric digital signature (e.g., biometric digital signature 1760 of FIG. 17) for the receiver 3120. The biometric digital signature may be generated as explained in the descriptions of FIGS. 1A to 17. The private key 3160 for the receiver 3110 can have an associated public key 3140 for the receiver 3210. The public key 3140 may be stored in the digital wallet 3180 on the smart phone 3125 associated with the receiver 3120.

During operation of the process 3100, the sender 3110 may desire to securely send a textual message (e.g., in the form of a data packet(s)) 3112 to the receiver 3120. For sending a secure textual message 3112, at least one processor (e.g., located on a computing device, such as the smart phone 3115, associated with the sender 3110) may encrypt the textual message 3112 by hashing (e.g., utilizing a fuzzy hash algorithm or, alternatively, a hash algorithm) the textual message 3112 with the public key 3140 associated with the receiver 3120 to generate a first hash code. Then, at least one processor (e.g., located on a computing device, such as the smart phone 3115, associated with the sender 3110) may hash (e.g., utilizing a fuzzy hash algorithm or, alternatively, a hash algorithm) the first hash code along with the NFT 3150 associated with the receiver 3120 to generate a final hash code 3190.

It should be noted that, in some embodiments, at least one processor (e.g., located on a computing device, such as the smart phone 3115, associated with the sender 3110) may encrypt the textual message 3112 by simultaneously hashing (e.g., utilizing a fuzzy hash algorithm or, alternatively, a hash algorithm) the textual message 3112, the public key 3140 associated with the receiver 3120, and the NFT 3150 associated with the receiver 3120 together to generate the final hash code 3190. The final hash code 3190 is the encrypted textual message.

Then, a computing device (e.g., the smart phone 3115) associated with the sender 3110 may transmit the encrypted textual message to a computing device (e.g., the smart phone 3125) associated with the receiver 3120. After the computing device (e.g., the smart phone 3125) associated with the receiver 3120 receives the encrypted textual message, the computing device (e.g., the smart phone 3125) associated with the receiver 3120 may decrypt encrypted textual message by de-hashing the encrypted textual message, the NFT 3150 associated with the receiver 3120, and the private key 3160 associated with the receiver 3120 (e.g., which may be based on geolocation data and/or biometric data associated with the receiver 3120) to obtain the unencrypted textual message 3112.

FIG. 32 is a diagram illustrating a process 3200 for utilizing NFTs (e.g., NFTs 3255, 3250) for secure communications (e.g., VOIP), in accordance with at least one embodiment of the present disclosure. In FIG. 32, a first caller (e.g., caller 1) 3210 and a second caller (e.g., caller 2) 3220 are shown. Also, the first caller 3210 and the second caller 3220 each have a respective associated computing device, which is in the form of a smart phone 3215, 3225.

The smart phone 3215 associated with the first caller 3210 may contain a digital wallet, which may include an NFT 3250 associated with the second caller 3220 for secure communications with the second caller 3220 and a public key 3240 associated with the second caller 3220. The digital wallet of the smart phone 3215 associated with the first caller 3210 may also include a private key 3265 (e.g., in a digital data format, such as a binary number and/or hexadecimal number) associated with the first caller 3210. In one or more embodiments, the private key 3265 may be a biometric digital signature (e.g., biometric digital signature 1760 of FIG. 17) for the first caller 3210. The biometric digital signature may be generated as explained in the descriptions of FIGS. 1A to 17. The private key 3265 for the first caller 3210 can have an associated public key 3245 for the first caller 3210. The public key 3245 may be stored in the digital wallet on the smart phone 3215 associated with the first caller 3210. The digital wallet on the smart phone 3215 associated with the first caller 3210 may also include an NFT 3255 associated with the first caller 3210 for secure communications. The NFTs 3250 and 3255 may be generated as explained in the description of FIG. 28.

The smart phone 3225 associated with the second caller 3220 may contain a digital wallet, which may include the NFT 3255 associated with the first caller 3210 for secure communications with the first caller 3210 and the public key 3245 associated with the first caller 3210. The digital wallet of the smart phone 3225 associated with the second caller 3220 may also include a private key 3260 (e.g., in a digital data format, such as a binary number and/or hexadecimal number) associated with the second caller 3220. In one or more embodiments, the private key 3260 may be a biometric digital signature (e.g., biometric digital signature 1760 of FIG. 17) for the second caller 3220. The biometric digital signature may be generated as explained in the descriptions of FIGS. 1A to 17. The private key 3260 for the second caller 3220 can have an associated public key 3240 for the second caller 3220. The public key 3240 may be stored in the digital wallet on the smart phone 3225 associated with the second caller 3210. The digital wallet on the smart phone 3225 associated with the second caller 3220 may also include the NFT 3250 associated with the second caller 3220 for secure communications.

In one or more embodiments, during operation of the process 3200, the first caller 3210 may desire have a secure voice call with (e.g., send voice communications 3212, which may be in the form of a data packet(s), to) the second caller 3220. For sending voice communications 3212 (e.g., spoken by the first caller 3210) by the first caller 3210 to the second caller 3220, at least one processor (e.g., located on a computing device, such as the smart phone 3215, associated with the first caller 3210) may encrypt 3290 the voice communications 3212 by hashing (e.g., utilizing a fuzzy hash algorithm or, alternatively, a hash algorithm) the voice communications 3212, the public key 3240 associated with the second caller 3220, and the NFT 3250 associated with the second caller 3220 together to generate the encrypted voice communications.

Then, a computing device (e.g., the smart phone 3215) associated with the first caller 3210 may transmit the encrypted voice communications to a computing device (e.g., the smart phone 3225) associated with the second caller 3220. After the computing device (e.g., the smart phone 3225) associated with the second caller 3220 receives the encrypted voice communications, the computing device (e.g., the smart phone 3225) associated with the second caller 3220 may decrypt 3292 the encrypted voice communications by de-hashing the encrypted voice communications, the NFT 3250 associated with the second caller 3220, and the private key 3260 associated with the second caller 3220 to obtain the unencrypted voice communications 3212.

In one or more embodiments, during operation of the process 3200, the second caller 3220 may desire have a secure voice call with (e.g., send voice communications 3214, which may be in the form of a data packet(s), to) the first caller 3210. For sending voice communications 3214 (e.g., spoken by the second caller 3220) by the second caller 3220 to the first caller 3210, at least one processor (e.g., located on a computing device, such as the smart phone 3225, associated with the second caller 3220) may encrypt 3296 the voice communications 3214 by hashing (e.g., utilizing a fuzzy hash algorithm or, alternatively, a hash algorithm) the voice communications 3214, the public key 3245 associated with the first caller 3210, and the NFT 3255 associated with the first caller 3210 together to generate the encrypted voice communications.

Then, a computing device (e.g., the smart phone 3225) associated with the second caller 3220 may transmit the encrypted voice communications to a computing device (e.g., the smart phone 3215) associated with the first caller 3210. After the computing device (e.g., the smart phone 3215) associated with the first caller 3210 receives the encrypted voice communications, the computing device (e.g., the smart phone 3215) associated with the first caller 3210 may decrypt 3294 the encrypted voice communications by de-hashing the encrypted voice communications, the NFT 3255 associated with the first caller 3210, and the private key 3265 associated with the first caller 3210 to obtain the unencrypted voice communications 3214.

FIG. 33 is a diagram illustrating a process 3300 for secure communications (e.g., images), in accordance with at least one embodiment of the present disclosure. In FIG. 33, a sender 3310 and a receiver 3320 are shown. The sender 3310 and the receiver 3320 may each have a respective associated computing device (e.g., in the form of a smart phone).

The computing device (e.g., smart phone) associated with the sender 3310 may contain a digital wallet 3370, which may include a public key 3340 associated with the receiver 3320. The digital wallet 3370 associated with the sender 3310 may also include a private key (e.g., in a digital data format, such as a binary number and/or hexadecimal number) associated with the sender 3310. In one or more embodiments, the private key may be a biometric digital signature (e.g., biometric digital signature 1760 of FIG. 17) for the sender 3310. The biometric digital signature may be generated as explained in the descriptions of FIGS. 1A to 17. The private key for the sender 3310 can have an associated public key for the sender 3310. The public key may also be stored in the digital wallet 3370 associated with the sender 3310.

The computing device (e.g., smart phone) associated with the receiver 3320 may contain a digital wallet 3380, which may include a public key associated with the sender 3310. The digital wallet 3380 associated with the receiver 3320 may also include a private key 3360 (e.g., in a digital data format, such as a binary number and/or hexadecimal number) associated with the receiver 3320. In one or more embodiments, the private key 3360 may be a biometric digital signature (e.g., biometric digital signature 1760 of FIG. 17) for the receiver 3320. The biometric digital signature may be generated as explained in the descriptions of FIGS. 1A to 17. The private key 3360 for the receiver 3320 can have an associated public key 3340 for the receiver 3320. The public key 3340 may be stored in the digital wallet 3380 associated with the receiver 3320.

In one or more embodiments, during operation of the process 3300, the sender 3310 may take a photographic image 3325 (e.g., of an object or landscape), which may be in the form of a data packet(s) containing a pixel image, by using a camera 3326. A computing device (e.g., a smart phone) associated with the sender 3310 may mint the image 3325 into an NFT 3330. After the image 3325 has been minted into an NFT 3330, the sender 3310 may desire to securely send the NFT 3330 to the receiver 3320. For securely sending the NFT 3330 to the receiver 3320, the computing device associated with the sender 3310 may encrypt 3390 the NFT 3330 by hashing (e.g., utilizing a fuzzy hash algorithm or, alternatively, a hash algorithm) the NFT 3330 and the public key 3340 associated with the receiver 3320 together to generate an encrypted NFT 3335.

Then, the computing device (e.g., a smart phone) associated with the sender 3310 may transmit the encrypted NFT 3335 to a computing device (e.g., a smart phone) associated with the receiver 3320. After the computing device associated with the receiver 3320 receives the encrypted NFT 3335, the computing device associated with the receiver 3320 may decrypt 3392 the encrypted NFT 3335 by de-hashing the encrypted NFT 3335 and the private key 3360 associated with the receiver 3320 to obtain the unencrypted NFT 3330.

FIG. 34 is a diagram illustrating a process 3400 for utilizing a white list 3460 for secure communications (e.g., textual messaging, such as a textual message 3430), in accordance with at least one embodiment of the present disclosure. In FIG. 34, a sender 3410 and a receiver 3420 are shown. The sender 3410 and the receiver 3420 may each have a respective associated computing device (e.g., in the form of a smart phone).

The computing device (e.g., smart phone) associated with the sender 3410 may contain a digital wallet 3470, which may include a public key associated with the receiver 3420. The digital wallet 3470 associated with the sender 3410 may also include a private key (e.g., in a digital data format, such as a binary number and/or hexadecimal number) associated with the sender 3410. In one or more embodiments, the private key may be a biometric digital signature (e.g., biometric digital signature 1760 of FIG. 17) for the sender 3410. The biometric digital signature may be generated as explained in the descriptions of FIGS. 1A to 17. The private key for the sender 3410 can have an associated public key for the sender 3410. The public key may also be stored in the digital wallet 3470 associated with the sender 3410.

The computing device (e.g., smart phone) associated with the receiver 3420 may contain a digital wallet 3480, which may include a public key associated with the sender 3410. The digital wallet 3480 associated with the receiver 3420 may also include a private key (e.g., in a digital data format, such as a binary number and/or hexadecimal number) associated with the receiver 3420. In one or more embodiments, the private key may be a biometric digital signature (e.g., biometric digital signature 1760 of FIG. 17) for the receiver 3420. The biometric digital signature may be generated as explained in the descriptions of FIGS. 1A to 17. The private key for the receiver 3420 can have an associated public key for the receiver 3420. The public key may be stored in the digital wallet 3480 associated with the receiver 3420.

In one or more embodiments, a white list 3460 may also be stored in the digital wallet 3480 associated with the receiver 3420. The white list 3460 contains a listing of users that the receiver 3420 has approved of receiving communications (e.g., voice or textual messages). As such, the receiver 3420 will receive communications only from users that are listed on the white list 3460. Users not listed on the white list 3460 will not be able to communicate with the receiver 3420.

In one or more embodiments, during operation of the process 3400, the sender 3410 may desire to send secure communications (e.g., a textual message 3430), which may be in the form of a data packet(s), to the receiver 3420. For securely sending secure communications (e.g., a textual message 3430) to the receiver 3420, a computing device (e.g., smart phone) associated with the sender 3410 may send a request 3452 to a computing device (e.g., smart phone) associated with the receiver 3420 for communicating with the receiver 3420. After receiving the request 3452 for communications, the computing device associated with the receiver 3420 will review the white list 3460 to determine whether the sender 3410 is listed on the white list 3460 and, as such, approved to communicate with the receiver 3420. If the computing device associated with the receiver 3420 determines that the sender 3410 is not listed on the white list 3460, the computing device associated with the receiver 3420 will send a rejection notification 3455 to the computing device associated with the sender 3410 indicating to the sender 3410 that the sender 3410 is not approved to communicate with the receiver 3420. However, if the computing device associated with the receiver 3420 determines that the sender 3410 is indeed listed on the white list 3460, the computing device associated with the receiver 3420 will send an approval notification 3451 to the computing device associated with the sender 3410 indicating to the sender 3410 that the sender 3410 is approved to communicate with the receiver 3420.

After the computing device associated with the sender 3410 receives the approval notification 3451, the computing device associated with the sender 3410 may encrypt 3450 the textual message 3430 by hashing (e.g., utilizing a fuzzy hash algorithm or, alternatively, a hash algorithm) the textual message 3430 and the public key associated with the receiver 3420 (and, optionally, an NFT associated with the receiver 3420) together to generate an encrypted textual message.

Then, the computing device associated with the sender 3410 may transmit the encrypted textual message to the computing device associated with the receiver 3420. After the computing device associated with the receiver 3420 receives the encrypted textual message, the computing device associated with the receiver 3420 may decrypt 3458 the encrypted textual message by de-hashing the encrypted textual message and the private key associated with the receiver 3320 (and, optionally, the NFT associated with the receiver 3320) to obtain the unencrypted textual message 3430.

Although particular embodiments have been shown and described, it should be understood that the above discussion is not intended to limit the scope of these embodiments. While embodiments and variations of the many aspects of the invention have been disclosed and described herein, such disclosure is provided for purposes of explanation and illustration only. Thus, various changes and modifications may be made without departing from the scope of the claims.

Where methods described above indicate certain events occurring in certain order, those of ordinary skill in the art having the benefit of this disclosure would recognize that the ordering may be modified and that such modifications are in accordance with the variations of the present disclosure. Additionally, parts of methods may be performed concurrently in a parallel process when possible, as well as performed sequentially. In addition, more steps or less steps of the methods may be performed.

Accordingly, embodiments are intended to exemplify alternatives, modifications, and equivalents that may fall within the scope of the claims.

Although certain illustrative embodiments and methods have been disclosed herein, it can be apparent from the foregoing disclosure to those skilled in the art that variations and modifications of such embodiments and methods can be made without departing from the true spirit and scope of this disclosure. Many other examples exist, each differing from others in matters of detail only. Accordingly, it is intended that this disclosure be limited only to the extent required by the appended claims and the rules and principles of applicable law.

## Claims

1. A method for generating a product non-fungible token (NFT) for a user, the method comprising:
determining that the user has visited a webpage or viewed digital content associated with a product;
hashing, using a hash algorithm, a public key associated with the user and an identification code for the product; and
generating, based on the hashing, the product NFT for the user.

2. The method of claim 1, further comprising:
hashing the product NFT and an NFT salt together; and
generating, based on the hashing, a discount NFT.

3. The method of claim 2, wherein the NFT salt is associated with at least one of an advertiser of the product, a distributor of the product, or a manufacturer of the product.

4. The method of claim 2 or 3, wherein the discount NFT is associated with a discount for a purchase of the product by the user.

5. A method for a conditional transfer of digital currency, the method comprising:
determining a request by a user to transfer digital currency to a first recipient;
determining whether conditional rules have been met for a transfer of the digital currency; and
transferring the digital currency to a digital wallet associated with a second recipient or a digital wallet associated with the user when the conditional rules for transfer of the digital currency have not been met by a specific passage of time.

6. The method of claim 5, wherein a smart contract comprises the conditional rules for the transfer of the digital currency.

7. The method of claim 6, wherein the smart contract comprises executable code capable to be run on a blockchain.

8. The method of claim 6 or 7, wherein the smart contract is configured to self-destruct when the conditional rules for transfer of the digital currency have not been met by the specific passage of time.

9. The method of any one of claims 5 to 8, wherein the conditional rules comprise at least one of a specific time in terms of a calendar date, a specific time in terms of mined blocks on a blockchain, a number of block confirmations on a blockchain, a currency price, a specific age of a person, or a specific age of the recipient.

10. A method for secure communications, the method comprising:
hashing an unencrypted communication message from a first user, a public key associated with the first user, a public key associated with a second user, and at least one of biometric data associated with the first user or geolocation data associated with the first user;
generating, based on the hashing, an encrypted communication message; and
transmitting the encrypted communication message to the second user.

11. The method of claim 10, further comprising obtaining at least one of the biometric data associated with the first user or the geolocation data associated with the first user.

12. The method of claim 10 or 11, further comprising:
de-hashing the encrypted communication message with a private key associated with the second user; and
generating, based on the de-hashing, the unencrypted communication message.

13. The method of claim 12, wherein the private key associated with the second user is based on at least one of geolocation data associated with the second user or biometric data associated with the second user.

14. A method for secure communications, the method comprising:
hashing an unencrypted communication message from a first user, a public key associated with a second user, and a communications non-fungible token (NFT) associated with the second user;
generating, based on the hashing, an encrypted communication message; and
transmitting the encrypted communication message to the second user.

15. The method of claim 14, further comprising:
hashing a private key associated with the second user and at least one of biometric data associated with the second user or geolocation data associated with the second user; and
generating, based on the hashing the private key, the communications NFT associated with the second user.
